(19) Europäisches Patentamt
European Patent Office
Office européen des brevets

(11) **EP 3 615 428 B1**

(12) **EUROPÄISCHE PATENTSCHRIFT**

(45) Veröffentlichungstag und Bekanntmachung des Hinweises auf die Patenterteilung:
**11.02.2026 Patentblatt 2026/07**

(21) Anmeldenummer: **18719554.0**

(22) Anmeldetag: **23.04.2018**

(51) Internationale Patentklassifikation (IPC):
**B65B 5/02** (2006.01)   **B65B 5/04** (2006.01)
**B65D 5/20** (2006.01)   **B65D 5/66** (2006.01)
**B65D 5/50** (2006.01)   **B65D 5/54** (2006.01)

(52) Gemeinsame Patentklassifikation (CPC):
**B65B 5/024; B31B 50/25; B65B 5/04; B65B 57/12;**
**B65B 57/20; B65B 59/001; B65B 59/003;**
**B65D 5/2095;** B31B 50/06; B31B 50/14;
B31B 50/22; B31B 50/26; B31B 50/62;
B31B 2100/0024; B31B 2110/35;   (Forts.)

(86) Internationale Anmeldenummer:
**PCT/EP2018/060311**

(87) Internationale Veröffentlichungsnummer:
**WO 2018/197400 (01.11.2018 Gazette 2018/44)**

(54) **STÜCK ZU STÜCK VERPACKUNG, VERFAHREN ZUR HERSTELLUNG DERSELBEN, VERFAHREN ZUM VERPACKEN EINES ARTIKELS IN DERSELBEN UND ZUSCHNITT ZUR HERSTELLUNG DERSELBEN**

INDIVIDUALIZED PACKAGING

EMBALLAGE PIÈCE PAR PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2017 CH 5762017**

(43) Veröffentlichungstag der Anmeldung:
**04.03.2020 Patentblatt 2020/10**

(73) Patentinhaber: **Kern AG**
**3510 Konolfingen (CH)**

(72) Erfinder:
• **STALDER, Marcel**
**3065 Bolligen (CH)**

• **FREYER, Wolfgang**
**3506 Grosshöchstetten (CH)**
• **VOGEL, Patrick**
**3123 Belp (CH)**

(74) Vertreter: **Troesch Scheidegger Werner AG**
**Schwäntenmos 14**
**8126 Zumikon (CH)**

(56) Entgegenhaltungen:
**EP-A1- 2 692 653       EP-A1- 3 093 246**
**WO-A1-2008/152344   WO-A1-2014/033635**
**WO-A1-2016/014679   US-A- 4 300 679**
**US-A1- 2015 027 086**

(52) Gemeinsame Patentklassifikation (CPC): (Forts.)
B31B 2120/004; B31B 2120/102; B65B 35/24;
B65B 43/10; B65B 43/24; B65B 43/52;
B65B 2210/04; B65D 5/5021; B65D 5/546;
B65D 5/6664; Y02W 30/80

**Beschreibung**

**Gebiet der Erfindung**

Die vorliegende Erfindung betrifft ein Verfahren zur Herstellung einer wiederverwendbaren Verpackung nach Anspruch 1, eine Verpackung nach Anspruch 12, sowie einen Zuschnitt nach Anspruch 14.

**Technischer Hintergrund**

Aus dem Stand der Technik sind verschiedene Verfahren zu einer weitgehend automatischen Herstellung von spezifisch auf die jeweils zu verpackenden Artikelabmessungen angepassten Kartons bekannt. So wird beispielsweise in US 7,647,752 B2 ein Apparat zur Herstellung kundenspezifischer Kartons vorgeschlagen, der ein System zur Bestimmung der Dimensionen eines zu verpackenden Objekts umfasst, wobei das System über ein Computerinterface mit einer Kartoniermaschine kommuniziert, um mit dem Apparat einen Karton herzustellen, in dem das Objekt genau hineinpasst. Dort werden jedoch nur einfache Kartons mit oder ohne überlappende Deckelklappen gezeigt. Solche Kartons müssen jedoch üblicherweise mit umlaufenden Klebebändern verstärkt und/oder Füllmaterial gepolstert werden, um einen sicheren Transport empfindlicher Artikel zu gewährleisten, da die Eigenstabilität des Kartons gering ist und die Anpassung des Innenraums an die Konturen des Artikels sehr begrenzt ist. Ausserdem weisen solche Kartons einen polygonen, üblicherweise aus einer Anzahl von Rechtecken zusammengesetzten, beispielsweise kreuzförmigen Zuschnitt auf, der einen hohen Anteil an Verschnitt bedingt.

Auch komplexere Verpackungen, wie bspw. aus EP 172133 A1 bekannt, zeigen einen ähnlichen, bspw. im Wesentlichen kreuzförmigen Zuschnitt des Kartonmaterials. Einleger zur Aufnahme / Halterung des oder der Artikel in der Verpackung werden dabei aus einem separaten Karton gefertigt und müssen ihrerseits zusätzlich in die Verpackung eingelegt werden, was im Falle einer automatischen Herstellung die Koordination des Materialflusses erschwert.

Die WO 2008/152344 A1 offenbart einen wiederverwendbaren faltbaren Zuschnitt, der ein im Wesentlichen flaches Blatt mit einer Vielzahl von Scharnierlinien umfasst, um eine Vielzahl von Paneelen zu definieren, wobei die Paneele im Gebrauch entlang der Scharnierlinien faltbar sind, um eine Schachtelstruktur zu definieren, die ein Bodenpaneel, mindestens erste, zweite und dritte Seitenwandpaneele, die sich von dem Bodenpaneel aus erstrecken, und ein oder mehrere erste lösbare Befestigungsmittel zum lösbaren aneinander Befestigen von mindestens zwei der gefalteten Seitenwandpaneele umfasst. Dabei können bspw. zwei gegenüberliegende Seitenwandpaneelen angeklebt oder Z-förmig an bzw. über der Bodenpaneele gefaltet sein.

Die US 4,300,679 offenbart eine einteilige Faltverpackung mit integrierten inneren und äußeren Umschlagteilen, die eine vollständig in sich geschlossene, ineinander greifende Verschlussanordnung mit Polstermitteln für den Inhalt der Verpackung aufweist. Dabei wird der zu Grunde liegende Zuschnitt zur Herstellung der Verpackung an der zu verpackenden Ware abgestützt.

Aufgabe der vorliegenden Erfindung ist es daher die Nachteile des Standes der Technik zu vermeiden und ein Verfahren zur Herstellung einer individualisierten, auf den/die jeweiligen Artikel angepasste Verpackung aufzuzeigen, welches leicht automatisierbar ist, sowie eine Verpackung und einen zu Grunde liegenden Zuschnitt zur Verfügung zu stellen, die sich für ein entsprechendes automatisiertes Verfahren besonders eignen. Dabei soll durch die Konstruktionsweise des Zuschnitts bzw. der Verpackung eine Produktion ohne oder mit nur vernachlässigbarem Verschnitt ermöglicht werden. Des Weiteren soll zur Vereinfachung des Produktionsablaufs die Herstellung der ganzen Verpackung, bei Bedarf auch mit Einleger, nur aus einem einzigen rechteckigen Zuschnitt erfolgen. Eine weitere Aufgabe der Erfindung ist es Verfahren zum Verpacken eines Artikels mit einer entsprechenden Verpackung aufzuzeigen.

**Offenbarung**

Das beanspruchte erfinderische Verfahren zeichnet sich dadurch aus, dass zunächst ein rechteckiger Basiszuschnitt BZ mit Seiten X und Y und einer Gesamtfläche xy bereitgestellt wird und

$$2 (a + h) < x \leq 3 (a + h) + a$$

und

b = y
ist.

Dabei entsprechen a und b den Seitenmassen der Grundfläche, h der Höhe und r der Breite ($r_s$) oder der um die Höhe h verringerten Breite ($r_s$-h) eines Randbereichs R der fertigen Verpackung. Anschliessend werden Faltlinien B des Basiszuschnitts parallel zu einer ersten Seite Y zumindest in folgenden Abständen von dieser hergestellt:

$B_1$: $a_1 = h$, wodurch eine erste Seitenfläche der Verpackung definiert wird;
$B_2$: $a_2 = h + a$, wodurch eine erste Grundfläche definiert wird;
$B_3$: $a_3 = 2h + a$, wodurch eine zweite Seitenfläche und für den Fall $x = 2 (a + h)$ die zweite Grundfläche definiert wird;

Des Weiteren wird durch trennendes Einschneiden zumindest zweier, dabei bevorzugt zu einer der Seite X parallelen Symmetrieachse $S_1$ seitensymmetrisch gelegenen Trennlinien T, jeweils ausgehend von gegenüberliegenden Seiten X des Basiszuschnitts BZ, entlang zumindest einer der Faltlinien B oder deren Verlängerung der Abstand zwischen den beiden näher zu $S_1$ gelegenen Endpunkten $E_T$ der Trennlinien T, so gewählt, dass der Abstand der Länge einer Seite B'' der fertigen Verpackung oder der Länge einer Seite M eines Einlegers der Verpackung entspricht. Dabei bleiben die jeweiligen Abschnitte, also bspw. Seitenfläche und Grundfläche oder Einleger und Seitenfläche untereinander bzw. mit dem Rest des Basiszuschnitts über eine Länge,

$$m = y - 2(h + r)$$

der Faltlinien miteinander faltbeweglich verbunden, wobei r entweder den Randbereich R selbst, der durch ein Überstehen der Flächen der Seiten- und Grundflächen der Verpackung gekennzeichnet ist oder den um die Höhe h verringerten Randbereich angibt.

Die Länge t der Trennlinien T kann dabei in einem Bereich $h \leq t < y / 2$, dabei insbesondere bevorzugt bei $t = r + h$ eingestellt werden.

Zumindest eine Faltlinie B, die auf einer gemeinsamen Gerade mit zwei Trennlinien liegt, kann dabei nur im Bereich zwischen zwei die Faltlinie B verlängernden Trennlinien T angebracht werden.

Das Verfahren umfasst dabei zusätzlich zur Herstellung der Faltlinien $B_1$ bis $B_3$ noch das Herstellen zumindest zwei der folgenden Faltlinien B des Basiszuschnitts parallel zu einer ersten Seite Y in folgenden Abständen von dieser:

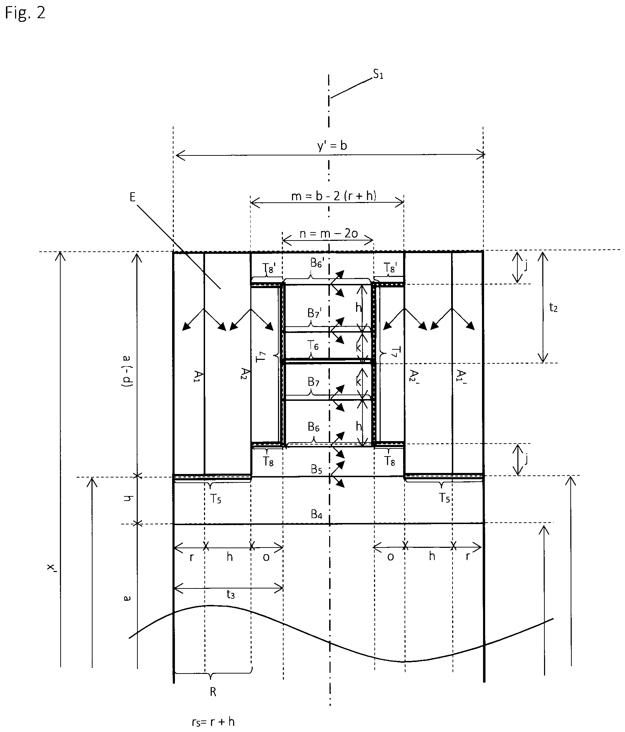

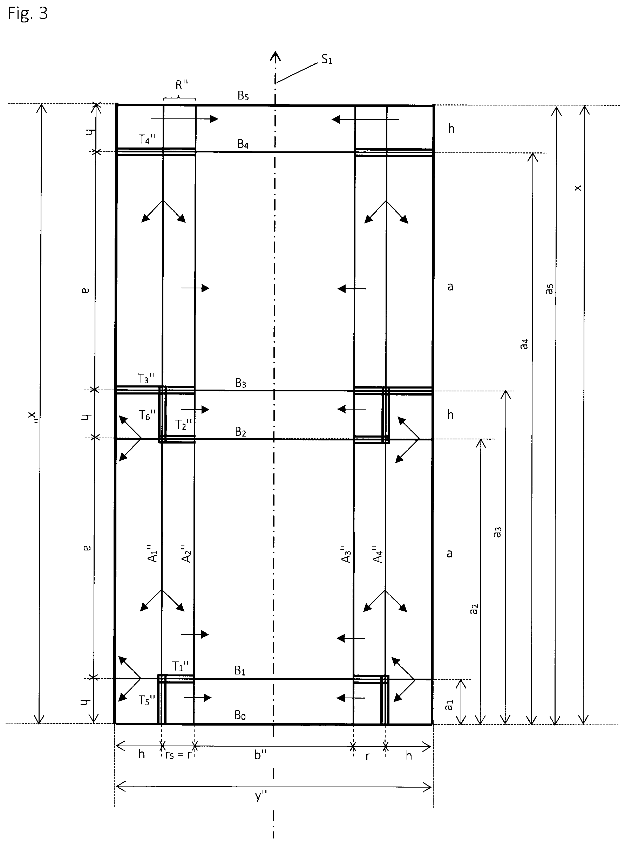

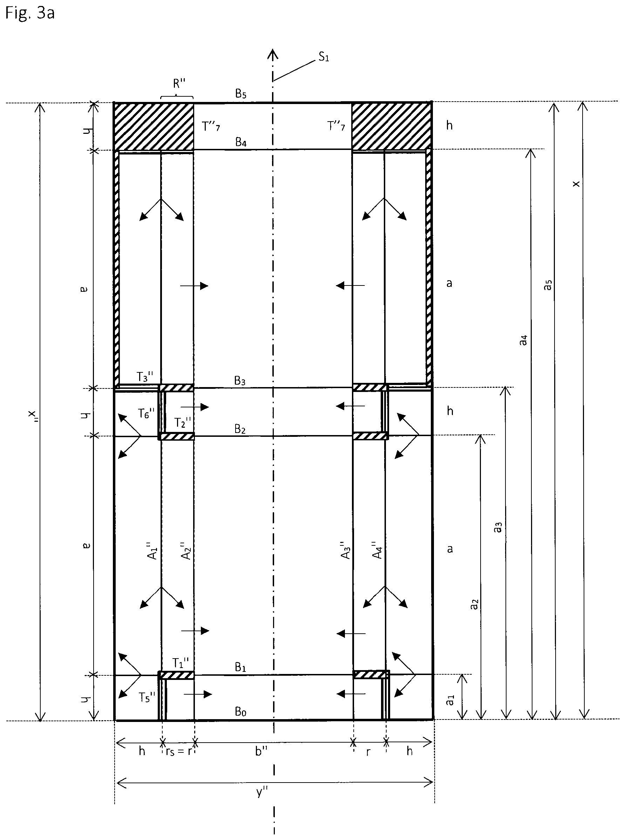

$B_4$: $a_4 = 2(h + a)$, wodurch eine den Einleger begrenzende Seitenfläche (siehe bspw. auch Fig.2) oder eine gänzlich oder nur teilweise mit der zugehörigen Seitenwand überlappende, bspw. als Verschlusslasche ausgebildete Seitenfläche gebildet werden kann (siehe bspw. auch Fig.3).

$B_5$: $a_5 = 2(h + a) + h$, wodurch jeweils in Verbindung mit $B_4$ entweder der Einleger oder eine dritte, überlappende, bspw. als Verschlusslasche ausgebildete Grundfläche gebildet werden kann;

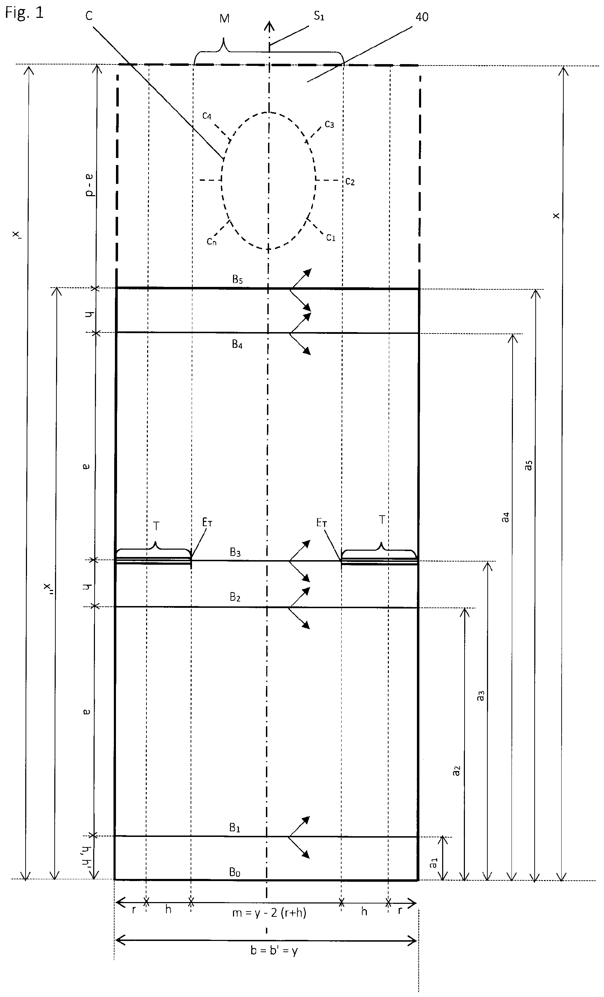

$B_0$ (optional): $a_0 = 0$, in diesem Fall kann bspw. eine Grundfläche als weitere Verschlusslasche ausgebildet werden, die sich bspw. bezüglich der in Figuren 1 und 3 als Seite Y des Basiszuschnitts bzw. Faltlinie $B_0$ in negativer Richtung, d.h. nach unten, bspw. um den Betrag a oder kleiner, erstreckt. In diesem Falle gilt: $3 (a + h) < x \leq 3 (a + h) + a$.

Des Weiteren kann im Bereich der zumindest einen Verschlusslasche zumindest eine Perforationslinie, parallel zur und/oder auf der Faltlinie, vorgesehen sein und sich dabei im Wesentlichen von einer Seite a zur gegenüberliegenden Seite a der Verpackung erstrecken, so dass zumindest ein Teil der Verschlusslasche getrennt bzw. abgetrennt werden kann. Dies kann bspw. durch Anbringen zweier im Wesentlichen parallelen Perforationslinien geschehen, die eine Abrisslasche bilden, wobei die Linien fischgrätenartig angeordnet sein können. Auch eine Kombination mit zumindest einer entsprechenden weiteren, einfachen Perforationslinie kann dabei vorteilhaft sein, wie weiter unten im Detail dargestellt.

Im Folgenden wird an Stelle der Bezeichnung Grundfläche, zwecks grösserer Anschaulichkeit auch teilweise die Bezeichnung Boden und Deckel für die den Boden bzw. Deckel der Verpackung bildenden Grundflächen verwendet. Ebenso wird an Stelle der Bezeichnung Seitenfläche auch die Bezeichnung vordere bzw. hintere Seitenwand (mit dem Deckel faltbeweglich verbundene Seitenfläche), sowie innere Seitenwände für die im Randbereich um r bzw. um r + h nach hinten versetzten Seitenwände verwendet. Der Abstand der inneren Seitenwände von der zugehörigen Seite a wird teilweise vereinfachend bei allen Ausführungsformen mit $r_s$ bezeichnet. Für die nun folgend beschriebene erfindungsgemässe Ausführungsform gilt $r_s = r + h$, für die weiter unten beschriebene weitere Ausführungsform gilt $r_s = r$.

In der erfindungsgemässen Ausführungsform des Verfahren wird ein bezüglich der Seite X endständiger Einleger E von einer daran angrenzenden Seitenfläche, d.h. einem Abschnitt der Abmessung h in X-Richtung und der Abmessung y in Richtung Y-Richtung, durch trennendes Einschneiden zweier bevorzugt seitensymmetrischer Trennlinien $T_5$ (bzw. $T_0$, hier nicht dargestellt) jeweils ausgehend von gegenüberliegenden Seiten X, entlang einer der Faltlinien $B_5$, $B_0$, oder eine dieser Faltlinien verlängernd, so getrennt werden, dass der Abstand zwischen den beiden inneren Endpunkten ET der Trennlinien T, der Länge m einer Seite M des Einlegers entspricht. Die Faltlinie $B_5$ kann dabei einen Abstand $a_5 = h + 2(h + a)$ von der ersten Seite Y, bzw. von $B_0$ aufweisen. Damit bleibt der Einleger mit dem Rest der Basis im mittigen Bereich der Faltlinie $B_5$ bzw. $B_0$ (hier nicht weiter dargestellt) faltbeweglich verbunden.

Unter Einleger wird hier grundsätzlich eine Innenauf- bzw. Innenunterteilung der Verpackung verstanden, deren Grösse und Abmessungen entsprechend den Dimensionen des Verpackungsgutes hergestellt werden können. Erfindungsgemässe Einleger werden dabei aus dem Basiszuschnitt BZ zurechtgeschnitten und gefaltet und sind mit dem Rest der Verpackung vor einem Verkleben faltbeweglich verbunden. Damit können Verpackung und Einleger einerseits in derselben Kartoniermaschine, praktisch ohne Abfall zu erzeugen hergestellt werden, andererseits trägt der zusätzlich, bspw. mit Heissleim eingeklebte Einleger E, wie auch das Vorsehen eines überstehenden Randbereiches R wesentlich zur Stabilität solcherart hergestellter Verpackungen bei.

Ein erfindungsgemässer Einleger wird dabei rechteckig aufgefaltet, wobei die zweite Seitenlänge des Einlegers im Wesentlichen dem Seitenmass a der Grundfläche der fertigen Verpackung entspricht.

Dabei erfolgt ein Herstellen von Faltlinien A am Basiszuschnitts im Bereich des Einlegers parallel zu beiden Seiten X jeweils in folgenden Abständen zu den entsprechenden Seitenlinien:

$A_1(A_1') = r$, wodurch eine Bodenbreitelasche definiert wird;

$A_2(A_2') = r + h = r_s$, wodurch zwei innere, d.h. nach innen um den Abstand $r_s$ versetzte Seitenwände und die Aussenabmessungen des Einlegers in der XY - Ebene definiert werden und

die Vorbereitung einer Artikelaufnahme in einem mittigen Bereich $B_M$ des Einlegers erfolgt. Die Aussenabmessungen des Bereichs bezüglich der XY-Ebene können dabei $B_M = m \times a$ sein, wobei $m = y - 2 (r + h)$. Die Vorbereitung der Artikelaufnahme kann dabei zumindest eine der folgenden Operationen umfassen:

- Anbringen zumindest einer weiteren Trennlinie T;

- Anbringen zumindest einer weiteren Faltlinien A, B;

- Anbringen zumindest eines Ausschnitts C., bspw. mit sternförmigen Schnitt- oder Perforationslinien $c_1 \ldots c_n$ um einen Artikel mit einem bezüglich Ausschnitt C etwas grösseren Aussenabmessungen geklemmt zu halten.

Das Vorbereiten der Artikelhalterung im Bereich des Einlegers kann dabei folgende Schritte umfassen:

- Herstellen von Faltlinien der Länge $n = m - 2 o = y - 2 (r + h + o)$ parallel und mittig zu der den Einleger begrenzenden Seite Y' in folgenden Abständen von dieser:

  - 
$$B_6 = a - j$$

  - 
$$B_7 = a - (j + h)$$

  - 
$$B_7' = j + h$$

  - 
$$B_6' = j$$

wobei o der Abstand zwischen den zur Seite X parallelen Faltlinien $A_2$, $A_2'$, bzw. dem dadurch gebildeten Aussenrand (entlang $A_2$, $A_2'$) und einem dazu bspw. parallelen Innenrand des Einlegers (entlang der jeweils benachbarten Schnittlinie $T_7$), wobei der Innenrand durch die Kante eines Innenrandbereiches oder die Kante einer den Innenrand bildenden Deckellasche gebildet sein kann, j der Abstand zwischen Y, Y' bzw. der zur Seite Y, Y' parallelen Faltlinie $B_5$ und einem dazu bspw. parallelen weiteren Innenrand des Einlegers, und $(j + h + k) = a / 2$ der Abstand zur Mitte des Einlegers von den Seiten Y, Y' und $B_5$ ist;

- Anbringen einer Trennlinie $T_6$ in einem bezüglich der Seite a mittleren Bereich des Einlegers, dabei bevorzugt mit einer Länge n parallel und mittig zur Seite Y, in einem Abstand $t_6 = a / 2 = j + h + k$ von Y, Y';

- Anbringen zweier Trennlinien $T_7$ jeweils zwischen gegenüberliegenden Faltlinien $A_2$, $A_2$' und der Symmetrieachse $S_1$, dabei bevorzugt mit einer Länge $p = 2(h + k) = (a - 2j)$ parallel und mittig, in einem Abstand $t_7 = r + h + o = (y - n)/2$ zu dem jeweiligen dem Einleger zugeordneten Abschnitt der X'-Seite.

Zusätzlich kann dabei zumindest in einseitiger, dabei jeweils gleichseitiger Verlängerung der Faltlinien $B_6$ und $B_6$' jeweils eine Trennlinie $T_8$, $T_8$' bis zur Faltlinie $A_2$ angebracht werden, wodurch die Ausbildung von einer bzw. von zwei gegenüberliegenden faltbeweglichen Innenklappen der fertigen Verpackung ermöglicht wird. Somit kann das ungewollte Herausfallen eines eingelegten Artikels durch die einen Rand bildenden heruntergeklappten Innenklappen beim Öffnen der Verpackung verhindert und der Artikel zusätzlich während des Versandes in der Verpackung fixiert werden.

Bei der vorliegenden Ausführungsform kann die Länge der Seite X des Basiszuschnitts im folgenden Bereich liegen:

$$2(h + a) + a \leq x \leq 3(a + h) + a$$

Dabei kann die Länge, in diesem Fall die Höhe h zwischen den Faltlinien $B_5$ und $B_4$ und/oder den Faltlinien $B_6$ ($B_6$') und/oder $B_7$ ($B_7$') sowie die Längen a des Einlegers um die ein- bis mehrfache Dicke (d) des Kartons korrigiert werden (Falt- resp. Biegezuschläge).

Verpackungsabmessungen der geschlossenen Verpackung für diese Ausführungsform liegen bevorzugt in einem Bereich (jeweils a x b x h) von 60 x 60 x 8 mm bis einschliesslich 353 x 250 x 100 mm, oder bevorzugt von 75 x 300 x 8 mm bis 300 x 600 x 100 mm, mit einem Einleger von bevorzugt 60 x 60 x 8 bis 250 x 360 x 100 mm, womit sich Abmessungen für den Inhalt, bzw. einen einzelnen Artikel von 45 x 30 x 8 mm bis 250 x 353 x 100 mm ergeben. Der Basiszuschnitt BZ für die Masse x, y ist dabei in einem Bereich von 600 x 300 mm bis einschliesslich 1200 x 600 mm, oder bevorzugt von 250 x 300 mm bis einschliesslich 1200 x 600 mm. Verwendet wurde eine beidseitig gedeckte Wellpappe 1,5 mm mit E-Welle.

In einer weiteren Ausführungsform des Verfahrens werden die Faltlinien A des Basiszuschnitts parallel zu einer ersten Seite X in folgenden Abständen von dieser hergestellt:

$$A_1": \quad b_1 = h$$

$$A_2": \quad b_2 = h + r,$$

wobei in dieser Ausführungsform $r = r_s$ die Randbreite eines Schutzrandes der Verpackung ist;

$$A_3": \quad b_3 = y - (h + r)$$

$$A_4": \quad b_4 = y - h$$

und durch trennendes Einschneiden von zumindest vier paarweise gegenüberliegenden Trennlinien $T_3$'', $T_4$", die jeweils ausgehend von gegenüberliegenden Seiten X, entlang zumindest einer der Faltlinien B eingeschnitten werden, der Abstand zwischen den beiden näher zu einer der Seite X parallelen Symmetrieachse $S_1$ gelegenen Trennlinienendpunkten $E_T$ der Länge b" einer Seite B" der fertigen Verpackung entspricht und zumindest vier paarweise an gegenüberliegenden Seiten der Symmetrieachse angeordnete Winkelschnitte $T_1$"/$T_5$", $T_2$"/$T_6$" entlang von Faltlinien A, B Flächen mit Seiten der Längen h und r bzw. h und h angebracht werden.

Diese benachbarten Flächen bilden an einer Y-Seite bzw. gemeinsam mit den Trennlinien $T_3$" und zugehörigen Faltlinien $A_2$" bzw. $A_3$" und $B_1$ bzw. $B_2$ Klebelaschen, die im Falle der mit den Seitenflächen faltbeweglich verbundenen Klebelaschen 45" der Abmessung h mit der vorderen bzw. hinteren Seitenwand 33' verklebt wird. Dazu werden nach den Falt- und Schneidvorgängen zunächst die zur X-Seite parallelen Seitenwände an den Linien $A_2$" und $A_3$" um 180° nach innen und entlang der Linien $A_1$" und $A_4$" um 90° nach oben gefaltet. Bei Bedarf kann diese Position durch Verkleben der um 180° gefalteten Flächen mit dem Boden bzw. dem Deckel erfolgen. Anschliessend oder gleichzeitig dazu kann das Falten der Klebelaschen 33" bzw. 45" nach Innen erfolgen. Die mit der vorderen bzw. hinteren Seitenwand 31' bzw. 33' faltbeweglich verbundenen Klebelaschen 33" werden dabei mit der jeweiligen Seitenlasche selbst verklebt. Diese Verklebungen tragen, zusätzlich zu der Ausbildung des Randbereichs R' mit um r nach innen versetzter Seitenwand, zur mechanischen Stabilität der Verpackung bei und können wie oben mit Heissleim, alternativ auch mit Doppelklebestreifen oder anderen geeigneten Klebern durchgeführt werden. Alternativ ist bei allen Ausführungsformen bspw. bei Vorsehen von Steckschlitzen in den Seitenflächen und entsprechender angepasster Formgebung der Faltlaschen auch eine Verbindung und Stärkung der Verpackung durch entsprechende mechanische Verbindungen möglich.

Die Winkelschnitte können dabei in einem Bereich zwischen $B_0$ (bzw. Y) und $B_1$, zwischen $B_2$ und $B_3$ und/oder zwischen $B_4$ und/oder $B_5$ sowie in einem Bereich zwischen $A_1$" und $A_2$" und zwischen $A_3$" und $A_4$" erfolgen.

Die Länge der Seite X des Basiszuschnitts kann bei dieser Ausführungsform im folgenden Bereich gewählt werden: $2 (a + h) \leq x \leq 3 (a + h)$.

Verpackungsabmessungen der geschlossenen Verpackung in dieser Ausführungsform liegen bevorzugt in einem Bereich (jeweils a x b x h) von 210 x 150 x 50 mm bis einschliesslich 700 x 400 x 400 mm, oder bevorzugt von 150 x 210 x 20 mm bis einschliesslich 400 x 660 x 300 mm. Basiszuschnitte BZ mit selber oder für grössere Dimension bspw. auf 3 mm erhöhten Dicke und x, y in analogem Verhältnis zu erster Ausführungsform oder bevorzugt von 360 x 350 mm bis 1830 x 1320 mm. Damit ergibt sich ein Verpackungsinhalt von 150 x 100 x 20 mm bis maximal 400 x 600 x 300 mm.

Somit umfasst die vorliegende Erfindung Verpackungen in einem Bereich von 60 x 60 x 8 mm bis einschliesslich 700 x 400 x 400 mm, dabei bevorzugt von minimal 75 x 210 x 8 mm bis maximal 400 x 660 x 300 mm.

Durch die erfindungsgemässe Gestaltung der Verpackungen können für verschiedenste Abmessungen von zu verpackenden Artikeln in einem gewissen Abmessungsspektrum jeweils identische Basiszuschnitte verwendet werden.

Bei allen Ausführungsformen der Erfindung kann das Herstellen von Faltlinien durch Rillierung und/oder durch Perforierung erfolgen.

Die Höhe h und/oder zumindest eine Abmessung a kann dabei um die ein- bis mehrfache Dicke d korrigiert (Falt- resp. Biegezuschläge), insbesondere verkürzt, wie beispielsweise im Falle der Abmessungen des Einlegers oder verlängert werden, wie beispielsweise bei Abmessungen des Bodens, des Deckels und/oder einer als Seitenfläche ausgebildeten Klebelasche.

In jedem Fall kann der Karton aus dem Zuschnitt so aufgerichtet werden, dass ein Artikel eingelegt werden kann. Damit ist die aus dem Karton hergestellte Verpackung eigenstabil, d.h. sie hält ihre Form auch im unverschlossen, bzw. geöffneten Zustand durch die spezielle Konstruktionsweise und Ver- bzw. Befestigung mittels Verklebungen oder mechanischer Verschränkung (bspw. Steckverbindungen oder Klemmverbindungen bspw. durch Ineinanderfalten oder Ineinanderstecken zweier oder mehrerer Kartonlaschen) wie oben beschrieben oder andere mechanische Befestigungsmittel wie bspw. Klammern, Nähte oder Ähnliches. Eine solche Verpackung kann auch auf Vorrat produziert, auf Lager gelegt und bei Bedarf abgerufen werden.

Eine weitere Aufgabe der Erfindung ist es eine erfindungsgemässe Verpackung zur Verfügung zu stellen. Eine solche Verpackung wird aus einem Basiszuschnitt BZ eines Kartons durch Rillieren und/oder lineares Perforieren, durch Anbringen von Schnittlinien, durch Faltungen entlang der Rillierungen und/oder Perforierungen sowie der Verwendung von Befestigungsmitteln, bspw. Verklebungen oder mechanische Befestigungsmittel, hergestellt. Dabei ist die Verpackung zumindest im geschlossenen Zustand zumindest bezüglich zweier Seitenwände (31, 31', 33, 33') und parallel oder senkrecht zu diesen durch zwei weitere Stützwände (42, 34''') mechanisch verstärkt. Die Stützwände (42, 34''') sind ebenfalls aus dem Basiszuschnitt, jeweils durch trennendes Einschneiden zumindest zweier Trennlinien T ($T_5$, $T_6$, $T_7$, $T_8$, $T_8'$, $T_3$", $T_4$") und Falten entlang zumindest einer, bevorzugt zumindest zweier Faltlinien B ($B_6$, $B_6'$, $B_7$, $B_7'$) hergestellt und jeweils über zumindest eine Faltlinie A, B ($B_6$, $B_6'$, $B_7$, $B_7'$, $A_2$, $A_2'$, $A_1$", $A_2$", $A_3$" $A_4$") mit dem Rest der Verpackung (30, 30') verbunden. Durch die vollständige Herstellung der Verpackung aus dem Basiszuschnitt BZ kann dieser nach Anbringen der notwendigen Rillierungen A, B und/oder Perforationslinien A, B sowie der entsprechenden Trennlinien T auch zwischengelagert werden und später aufgefaltet und zusätzlich verbunden werden (mechanisch oder bevorzugt durch Kleben). Rillierungen A, B und/oder Perforationslinien A, B sind dabei prinzipiell austauschbar. Perforationslinien A, B können bspw. durch einseitiges Perforieren einer für den Basiskarton verwendeten Wellpappe, bei der nur ein Deckblatt der beispielsweise beidseitig gedeckten Wellpappe perforiert wird, hergestellt werden. Geeignete Wellpappdimensionen sind je nach Anwendung bzw. Grösse der Verpackung zwischen 0.8 und 2.5 mm, bzw. 3.5 mm Dicke, dabei bevorzugt zwischen 1 und 2 mm, bzw. 3 mm, bspw. Wellpappe 1,5 bzw. 3 mm mit E- bzw. doppelte E- oder B-Welle.

Eine solche Verpackung ist dabei im Wesentlichen quaderförmig, wobei je zwei gegenüberliegende Seitenflächen mit Massen a bzw. h eine umlaufende Randkante $R_K$ eines Randbereichs R und eine dazu um einen Abstand $r_s = r + h$ oder $r_s = r$ nach innen versetzte Seitenfläche aufweisen.

Die erfindungsgemässe Gestaltung der Verpackung erlaubt durch die umlaufende Randkante einen optimalen Artikelresp. Produktschutz.

Eine solche Verpackung kann nach einem beliebigen, wie oben offenbartem Verfahren, beispielsweise wie nachfolgend beschrieben automatisiert mittels einer Kartoniermaschine hergestellt werden. Sie eignet sich durch den einfachen Aufbau und Handling besonders für Fertigungen, die eine hohe Flexibilität und Individualisierung benötigen, da lediglich ein Kartonzuschnitt BZ zur Herstellung einer Verpackung notwendig ist. Ein solcher Basiszuschnitt BZ kann vor dem Anbringen der Schnitt-, Rillier- und Perforationslinien auf einfachste Weise bedruckt werden. Sowohl der Basiszuschnitt, der fertig rilliert/perforiert und geschnittene Kartonzuschnitt als auch die aufgerichtete Verpackung können einfach zwischengelagert werden, und später für das Aufrichten der Verpackung oder einem teil- oder ganz automatisierten Packverfahren weiterverwendet werden.

Weitere Ausführungsformen der Verpackung werden einerseits beim oben beschriebenen Verfahren zur Herstellung der Verpackung andererseits in der Beschreibung zu den Figuren ausgeführt.

Es kann ein Verfahren zum Verpacken eines Artikels mit einer wie oben beschriebenen Verpackung zur Verfügung gestellt werden. Ein solches Verfahren umfasst folgende Schritte:

Erfassen von weiteren Artikelinformationen des Artikels, wie Geometrie, Abmessungen, Dimensionen etc., während des Transports des Artikels zu einer Einlegestation und Verarbeiten der erfassten Informationen durch ein Computerinterface um:

- die für die jeweilige Artikelgrösse geeigneten Abmessungen a, b, h und $r_s$ der Verpackung zu bestimmen; wobei a, b und h den durch die Artikelabmessungen bestimmten geometrischen Aussenabmessungen einer quaderförmigen Verpackung und $r_s$ einem entsprechenden an zwei gegenüberliegenden Seiten der Länge a und Höhe h überstehenden Randbereich R zum Schutz des Verpackungsinhalts entspricht;
- einen dafür geeignet dimensionierten Basiszuschnitt XY mit Seitenlängen x und y auszuwählen oder aus einem Kartonband herzustellen und einer Kartoniermaschine zuzuführen;
- die Kartoniermaschine automatisch zur Herstellung der entsprechenden Abmessungen (a, b, h, $r_s$) der Verpackung aus dem Basiszuschnitt BZ einzustellen und/oder anzusteuern;
- die Kartoniermaschine oder eine zwischen Kartoniermaschine und Einlegestation angeordnete Kartonwendeeinheit so anzusteuern, dass die Verpackung nach oben geöffnet an die Einlegestation übergeben wird;

wobei das Computerinterface die Kartonzufuhr A zur Auswahl oder Herstellung des Basiszuschnitts, die Kartoniermaschine B und eine Artikeltransporteinheit C so steuert, dass Verpackung und Artikel synchron die Einlegestation erreichen und der Artikel in die Verpackung eingelegt werden kann.

Dabei können Artikel verschiedenster Abmessungen in beliebiger Reihenfolge verarbeitet werden (Stück zu Stück, Losgrösse 1).

Dabei können die Artikelinformationen und/oder weitere Artikelinformationen von einem am Artikel oder mit dem Artikel bereitgestellten Code abgelesen werden. Beispielsweise können die zur Herstellung der zur Verpackung notwendigen Artikelinformationen wie Versandadresse, Auftragsnummer, Versandart, etc. beim Erkennen des Artikels über die Artikelidentifikation, bspw. durch Ablesen eines Strichcodes, aus einem mit dem Computerinterface verbundenen Kunden-Auftragsabwicklungs-System, in dem Artikelidentifikation, Auftragsdaten (Versandadresse, Auftragsnummer, Versandart, etc.) und falls benötigt weitere Artikelinformationen, wie Geometrie und/oder Abmessungen des Artikels, abgelegt sein können, bezogen bzw. abgerufen werden.

Alternativ können auch zum Bereitstellen von, die Geometrie und/oder Abmessungen des Artikels betreffenden, weiteren Artikelinformationen zunächst räumliche Dimensionen des Artikels erfasst und diese bspw. gemeinsam oder in zeitlicher Abfolge mit der Artikelidentifikation und/oder übrigen Artikelinformation an das Computerinterface weitergeleitet werden.

Oder/und Zusätzliche Artikelinformation, wie bspw. Versandadresse, Absender, weitere Produktdaten etc. können dabei zusätzlich vom Code abgelesen werden.

Das Einlegen des Artikels kann dabei von Hand oder automatisch erfolgen, wobei nach dem Einlegen des Artikels ein automatisches Verschliessen und Abtransport der Verpackung, bspw. mittels einer Abtransportvorrichtung E erfolgen kann.

Vor oder während des Abtransports kann zumindest einer der folgenden Schritte bevorzugt automatisch, bspw. durch das Computerinterface gesteuert erfolgen:

- Kennzeichnen, bspw. Etikettieren und/oder Adressieren, der Verpackung;

- Prüfen der Verpackung.

Dabei kann Letzteres mit einem automatischen Auslenken von fehlerhaften Verpackungen auf eine Ausschussaufnahme F, bspw. ein Ausschussband oder in einen Ausschussbehälter, kombiniert sein.

Durch die Verbindung des Computerinterface mit dem Kunden-Auftragsabwicklungs-System kann der Status bezüglich der verpackten Artikel automatisiert rückgemeldet werden.

Die Kartoniermaschine kann mehrere Untereinheiten, wie eine Kartontransporteinheit, die auch als Kartonwendeeinheit ausgebildet sein kann zum Bereitstellen des Kartons in einer nach oben geöffnet Position und/oder Transport zur Einlegestation, sowie zumindest zwei, bevorzugt zumindest drei Falt- und/oder Klebeeinheiten umfassen.

Dabei können die Kartonzufuhr A und Kartoniermaschine B Zuschnitte über einen Verpackungstransportpfad, der sich von Einheit A zumindest bis Einheit D erstreckt bzw. die Artikeltransporteinheit C einen Artikel entlang eines Artikeltransportpfades, der zumindest die Artikeltransporteinheit umfasst, jeweils getaktet in Richtung Packstation A, insbesondere zur Einlegestation 15 und der verpackte Artikel durch eine Abtransportvorrichtung E entlang eines Abtransportpfades ZT der zumindest Teile der Packeinheit D und die Abtransportvorrichtung E umfasst, getaktet oder kontinuierlich von der Einlegestation wegbewegt wird. Dabei können die Takte durch das Computerinterface in Abhängigkeit der Dauer des längsten Bearbeitungsschrittes zur Herstellung der Verpackung eingestellt werden. Bspw. kann auch bei manueller Bedienung der Einlegestation zur Erleichterung für den Operator, der Ablauf auf ein Taktende, bspw. durch einen Stopp-Schalter oder über ein Bedienpanel unterbrochen bzw. wieder in Gang gesetzt werden. Alternativ kann, wenn auch die Einlegestation durch einen Roboter, bspw. einen "pick and place"-Roboter, insbesondere einen Scara-Roboter automatisiert bedient wird, auch diese bevorzugt ebenfalls durch das Computerinterface angesteuert werden.

Ein besonders einfacher und daher kostengünstiger automatischer Einschubmechanismus kann durch Einschieben des Inhalts von der Vorderseite her, bspw. mittels Transportbändern, in die noch nicht fertig verschlossene Verpackung verwirklicht werden. In diesem Fall erfolgt das Auffalten und Verkleben einer bezüglich einer Verpackungstransportrichtung VT vorderen Seitenwand erst nach dem Einschieben der Artikel in der Einlegestation, bspw. in einem folgenden Faltwerk mit Klebeeinheit.

Das Computerinterface kann auf eine oder mehrere, mit diesem verbundene, Recheneinheiten steuernd zugreifen bzw. diese ansteuern wobei vorteilhafterweise auch Signale von den verbundenen Recheneinheiten, wie bspw. einer Steuerung zumindest einer der Untereinheiten A bis F, durch das Computerinterface empfangen und bspw. zur Synchronisierung, Schnellabschaltung, Prozessaufzeichnung etc. verarbeitet werden können.

Im Folgenden wird ein Verpackungssystem zum Verpacken eines Artikels, bspw. mit einer wie oben beschriebenen Verpackung beschrieben. Das Verpackungssystem umfasst dabei

- eine Artikeltransporteinheit C, die bezüglich einer Artikeltransportrichtung AT vor einer Einlegestation 15 angeordnet ist;

- eine Objekterkennung 14, die im Bereich der Artikeltransporteinheit C oder bezüglich der Artikeltransportrichtung AT unmittelbar vor oder nach der Artikeltransporteinheit C angeordnet ist;

- eine Kartonzufuhr A, die bezüglich einer Verpackungstransportrichtung VT vor der Einlegestation 15 angeordnet ist;

- eine Kartoniermaschine B, die bezüglich der Verpackungstransportrichtung VT stromabwärts der Kartonzufuhr und vor der Einlegestation (15) angeordnet ist;

- ein Computerinterface, das mit Objekterkennung (14), Kartonzufuhr A und Kartoniermaschine B verbunden und dazu konfiguriert ist von der Objekterkennung (14) erfasste Daten in Steuersignale zumindest für Kartonzufuhr A und Kartoniermaschine B so umzuwandeln, dass ein wie oben beschriebenes Verfahren zum Verpacken eines Artikels durchgeführt werden kann.

Das Computerinterface kann dazu konfiguriert sein, aus den Daten die der Artikelgrösse entsprechenden Masse

- xy eines im Wesentlichen rechteckigen Basiszuschnitts BZ zu berechnen und damit die Kartonzufuhr A anzusteuern um einen geeigneten Basiszuschnitt herzustellen oder auszuwählen sowie

- sowie die Masse a, b, h und $r_s$ der im Wesentlichen quaderförmigen Verpackung zu berechnen und damit die Kartoniermaschine zur Herstellung der Verpackung anzusteuern.

Wobei auch hier a, b und h den durch die Artikelabmessungen bestimmten geometrischen Aussenabmessungen einer quaderförmigen Verpackung und $r_s$ einem entsprechenden an zwei gegenüberliegenden Seiten der Länge a und Höhe h überstehenden Randbereich zum Schutz des Verpackungsinhalts entspricht.

Die Kartonzufuhr kann dabei vorteilhafterweise einen Einzug mit zumindest zwei Anlegern umfassen, um Basiszuschnitte unterschiedlicher Grösse aus den Anlegern abrufen zu können, die durch den Anleger auf dem Einzug abgelegt und vor Übergabe an die Kartoniermaschine ausgerichtet werden. Das Ablegen des Basiszuschnitts kann dabei bezüglich einer Wellenrichtung des Zuschnitts längs zur Verpackungstransportrichtung VT, d.h. Wellentäler bzw. Wellenkämme quer dazu, oder bezüglich der Wellenrichtung quer zur Verpackungstransportrichtung VT, d.h. Wellentäler bzw. Wellenkämme längs dazu, erfolgen. Bei Ausführungsformen mit Einleger kann die Wellenrichtung dabei bevorzugt quer mit Wellentälern parallel zu X, Bei Ausführungsformen ohne Einleger kann die Wellenrichtung bevorzugt längs mit Wellentälern parallel zu Y erfolgen.

In der Folge werden für Ausführungsformen mit Einleger zunächst in einem Längsbearbeitungsschritt in einer Längsbearbeitungsstation die Faltlinien $A_n$ und anschliessend in einem Querbearbeitungsschritt in einer Querbearbei-

tungsstation die Faltlinien $B_n$ geformt. Für Ausführungsformen ohne Einleger kann die Herstellung der entsprechenden Faltlinien $A_n$ und $B_n$ in umgekehrter Reihenfolge geschehen. Auch eine Umkehr der Reihenfolge ist in beiden Fällen prinzipiell möglich. In jedem Fall können dabei gleichzeitig die erforderlichen Längs- bzw. Quer- und Trennschnitte $T_n$ vorgenommen werden.

Die Objekterkennung kann dabei einen Codeleser und/oder eine optische 3D-Erkennung umfassen.

Alternativ kann auch ein Betrieb des Systems ohne die Objekterkennung der zu verpackenden Artikel erfolgen. Dabei kann die herzustellende Verpackungsdimension über ein im Computer-Interface hinterlegtes Rezept vom Operateur angewählt und bei Bedarf produziert werden.

Die Kartoniermaschine kann dabei eine Längsbearbeitungsstation (4) mit verstellbaren Schneid-, Rillier- und/oder Perforierwerkzeugen und eine Querbearbeitungsstation (5) mit verstellbaren Schneid-, Rillier- und/oder Perforierwerkzeugen umfassen. Längs- und Querbearbeitungsstation sind dabei so konfiguriert, dass sie zueinander rechtwinklige Falt-, Perforations- oder Trennlinien am Basiszuschnitt anbringen können. Dabei werden vorteilhafterweise zunächst alle parallelen Linien ($A_{1-n}$) einer Richtung und dann alle parallelen Linien ($B_{1-n}$) einer dazu senkrechten Richtung oder umgekehrt angebracht. Stromabwärts der Längsbearbeitungsstation und stromabwärts der Querbearbeitungsstation sind dabei ein oder mehrere Faltwerke, dabei bevorzugt zumindest zwei, insbesondere bevorzugt zumindest drei Faltwerke angeordnet.

Dabei kann zumindest ein Faltwerk eine steuerbare Auftragsvorrichtung für Klebstoff, beispielsweise ein Schmelzgerät 11 und Düse für Heissleim oder wie oben beschriebene Klebstoffe und Kleber, umfassen.

Zwischen Kartoniermaschine B und Einlegestation kann eine Kartonwendeeinheit angeordnet sein um den Karton an der Einlegestation geöffnet, mit der Vorderseite zum Operateur oder Einlegeroboter gerichtet abzulegen. Des Weiteren kann stromabwärts der Einlegestation eine Abtransportvorrichtung E angeordnet sein. Diese oder die Packeinheit D selbst kann eine Kennzeichnungs- und/oder eine Prüfeinheit umfassen.

In einer Ausführung eines Verpackungssystems können dabei zumindest die Einheiten A bis D, dabei bevorzugt zumindest die Einheiten A bis E des Systems durch das Computerinterface direkt oder über dazwischengeschaltete Recheneinheiten angesteuert, insbesondere synchronisiert werden. Dabei kann an der Einlegestation (15) eine manuelle Eingabevorrichtung (12) mit dem Computerinterface verbunden sein um zusätzlich einen Stopp/Start-Befehl oder insbesondere eine manuelle Taktung zur Synchronisation an das Computerinterface weiterzuleiten. Die Eingabevorrichtung kann dabei als Handschalter oder als Bedienpanel, oder um den Operateur die Hände frei zu halten insbesondere als Fussschalter ausgebildet sein.

## Bezugszeichenlisten

Zu **Figuren 1-3a:** Masspfeile sind mit offenen Pfeilspitzen, Faltungspfeile mit geschlossen schwarzen Pfeilspitzen dargestellt. Dabei bedeutet ein gerader Faltungspfeil ein Falten des Bereichs mit der Pfeilbasis um 180° um die Faltlinie, zwei gewinkelt von der Faltlinie ausgehende Pfeile eine Faltung um 90°, wobei zwei nebeneinanderliegende 90°-Faltungen Z- oder U-förmig erfolgen können. Faltungen entlang der Faltlinien $B_0$ bis $B_5$ erfolgen immer U-förmig.

Bezugszeichenliste I, zu Figuren 1-3a

| XY | Basiszuschnitt |
|---|---|
| xy | Grundfläche des Basiszuschnitts |
| $R_K$ | Randkante |
| m | Seitenlänge des Einlegers parallel zur Y-Seite, entlang Faltlinie B |
| $S_1$ | Symmetrieachse |
| X | Längsseite des Basiszuschnitts |
| x, x', x'' | Länge von X |
| Y | erste Seite / Querseite des Basiszuschnitts |
| y, y', y'' | Länge von Y |
| x·y | Gesamtfläche des Basiszuschnitts |
| a | Seitenmass der Seite A der fertigen Verpackung |

(fortgesetzt)

| | |
|---|---|
| $a_1$, $a_2$, $a_3$, ... | Seitenmass / Abstand (einer Faltlinie B) von der ersten Seite Y des BZ |
| b, b', b" | Seitenmass der Seiten B, B', B" der fertigen Verpackung |
| d | Dicke des Kartons |
| h | Höhe der fertigen Verpackung |
| $A_1$, $A_2$, $A_3$, ... $A_n$; $A_1'$, $A_2'$, $A_3'$, ... $A_n'$ | Faltlinien des Basiszuschnitts parallel zu der X-Seite |
| $B_1$, $B_2$, $B_3$,... $B_n$; $B_1'$, $B_2'$, $B_3'$,... $B_n'$ | Faltlinien des Basiszuschnitts parallel zu der ersten Seite Y |
| $B_M$ | Mittiger Bereich des Einlegers |
| C; $C_1$, $C_2$, $C_3$ ... | Weitere Trenn- oder Perforationslinien |
| T; $T_1$, $T_2$, $T_3$, ... ; $T_1'$, $T_2'$, $T_3'$, ... ; $T_1"$, $T_2"$, $T_3"$, ... | Trennlinien |
| $t_1$, $t_2$, $t_3$, ... | Länge einer Trennlinie |
| $E_T$ | (innerer) Endpunkt von Trennlinien T |
| $m = y - 2 (r + h) \approx b"$ | Länge der Seite M des Einlegers, entspricht der Seitenlänge b" der Seite B bei Verpackungen ohne Einleger |
| $r \le r_s \le r + h$ | Randbreite eines Schutzrandes der Verpackung |
| $j = a / 2 - (h + k)$ | Abstand zwischen $B_5$ bzw. Y' zu $B_6$, $B_6'$ |
| $k = a / 2 - (h + j)$ | Abstand zwischen $B_7$ bzw. $B_7'$ zu $T_6$ |
| $o = (m - n) / 2$ | Abstand zwischen $A_2$ bzw. $A_2'$ zu $T_7$ |

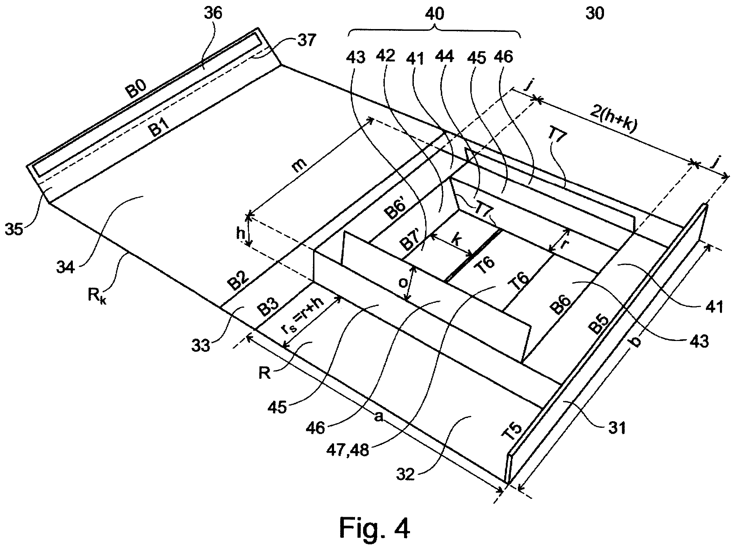

Bezugszeichenliste II, zu **Figuren 4-7:**

| | |
|---|---|
| 1 | Kartonanleger |
| 2 | Zusätzlicher Kartonanleger |
| 3 | Einzug/Ausrichtung |
| 4 | Längsbearbeitung (Rillieren, Perforieren, Schneiden) |
| 5 | Ouerbearbeitung (Rillieren, Perforieren, Schneiden) |
| 6 | Faltwerk / Einleger |
| 7 | Faltwerk, Aufrichten / Einleger |
| 8 | Faltwerk mit Klebestation (Heissleim) / Einleger |
| 9 | Faltwerk / Einleger Zufalten |
| 10 | Wenden |
| 11 | Schmelzgerät Heissleim |
| 12 | Bedienpanel |
| 13 | Puffer Artikelzuführung (Option) |
| 14 | Objekterkennung mit Optionen Zähler, Coderkennung |
| 15 | Einlegestation |
| 16 | Faltwerk / Zufalten Verpackung |
| 17 | Klebestation für Verschluss der Verpackung (Heissleim) |
| 18 | Verschluss- und Etikettierstation |
| 19 | Qualitäts-/Verschlusskontrolle/Zähler (Option); bspw. Kamerasystem, Sensor |

(fortgesetzt)

| 20 | Abtransportband |
|---|---|
| 21 | Weiteres Abtransportband |
| 22 | Operateur |
| 30, 30' | Verpackung |
| 31, 31' | Vordere Seitenwand |
| 32, 32' | Boden |
| 33, 33' | Hintere Seitenwand |
| 34, 34' | Deckel |
| 34" | Deckelrand |
| 34''' | Deckelrandseite |
| 35, 35' | Verschlusslasche |
| 33", 35", 45" | Klebelaschen |
| 36 | Klebestreifen (Heissleim, Doppelklebeband, ...) |
| 37 | (Abriss) Perforationslinie |
| 38 | Weitere Verschlusslasche |
| 39 | Abrisslasche |
| 40 | Einleger |
| 41 | Innenrandbereich des Einlegers (E) |
| 42 | Innere Begrenzungswände des Einlegers (E) |
| 43 | Bodenlängenlaschen |
| 44 | Bodenbreitenlaschen |
| 45, 45' | Innere Seitenwände |
| 45" | Klebelaschen |
| 46 | Deckellasche |
| 47 | Einlegeöffnung |
| 48, 48' | Einlegebereich |
| A | Kartonzufuhr |
| B | Kartoniermaschine |
| C | Artikeltransporteinheit |
| D | Packeinheit |
| E | Abtransportvorrichtung |
| F | Ausschussaufnahme |
| AT | Artikeltransportrichtung |
| VT | Verpackungstransportrichtung |
| ZT | Abtransportpfad |

**Figurenbeschreibung**

Im Folgenden wird die Erfindung an Hand von Figuren beispielhaft beschrieben. Figuren 1 bis 7 zeigen:

Fig.1  Grundlegendes Faltschema und Zuschnitt
Fig.2  Faltschema und Zuschnitt mit Einleger

Fig.3 Faltschema und Zuschnitt ohne Einleger, nicht zur Erfindung gehörend

Fig.4 Verpackung mit Einleger

Fig.5 Verpackung ohne Einleger, nicht zur Erfindung gehörend

Fig.6 Verschlussvariante

Fig.7 Verpackungssystem, nicht zur Erfindung gehörend

Bezüglich der Bezugszeichen der Figuren 1 bis 3 sei auf Bezugszeichenliste I hingewiesen. Diese Figuren zeigen Faltlinien $A_0$-$A_n$, sowie $B_0$-$B_n$, Faltschema und Trennschnitte T, $T_1$-$T_n$, wie sie zur Herstellung einer erfindungsgemässen Verpackung auf einem Basiszuschnitt BZ der Abmessungen xy angebracht werden. Ein solcher zur Faltung vorbereiteter Basiszuschnitt wird hier der Einfachheit halber Zuschnitt genannt. Wiewohl die folgenden Beispiele an Hand von Zuschnitten aus Karton besprochen werden, kann grundsätzlich auch, wie dem Fachmann verständlich, anderes bezüglich Festigkeit und Verarbeitbarkeit geeignetes Material, wie bspw. stärkeres Papier oder Plastikfolien oder auch entsprechende Verbundmaterialien etc. zur Herstellung von Verpackungen verwendet werden. Auch Verpackungen aus solchen Materialien sind daher von der Erfindung umfasst. Masspfeile sind mit offenen Pfeilspitzen, Faltungspfeile mit geschlossen schwarzen Pfeilspitzen dargestellt. Dabei bedeutet ein gerader Faltungspfeil ein Falten des Bereichs mit der Pfeilbasis um 180° um die Faltlinie, zwei gewinkelt von der Faltlinie ausgehende Pfeile eine Faltung um 90°, wobei zwei nebeneinanderliegende 90°-Faltungen Z- oder U-förmig, d.h. in der gleichen Richtung oder in entgegengesetzter Richtung, erfolgen können. Symmetrieachse $S_1$ ist in Fig.1-3 strichpunktiert, mögliche Faltlinien fein strichliert, ausgeführte Faltlinien A, B fein durchgehend und Schnittlinien T doppelt durchgehend gezeichnet.

An Hand der Fig.1 sei hier das Prinzip der für erfindungsgemässe Kartonzuschnitte, bzw. für das erfindungsgemässe Verfahren wesentlichen Merkmale beschrieben. Hier werden zwei Kartonzuschnitte mit X-Seiten unterschiedlicher Grösse, beispielsweise x" = 2 (h + a) + h mit durchgehenden Linien und x' = 3 (h + a) einschliesslich der um die strichlierten Seitenlinien verlängerten Verpackung gezeigt. Die Faltungen entlang der Faltlinien $B_0$ bis $B_5$ erfolgen immer U-förmig wodurch im Falle der Seitenlänge x" eine Verpackung mit zwei Grundflächen der Masse ay bzw. ab', ab" (Boden 32, 32', Deckel 34, 34') , zwei Seitenflächen der Masse hy bzw. hb', hb" (vordere und hintere Seitenwand) und eine Verschlusslasche 35 derselben Abmessungen, bspw. zwischen Linien $B_4$ und $B_5$ oder $B_0$ und $B_1$ gebildet wird. $B_5$ und $B_0$ bilden in diesem Fall die Y-Seiten des Basiszuschnitts. Wird der Basiszuschnitt BZ um eine Grundfläche an einer der Linien $B_0$ oder $B_5$ in eine entsprechende x-Richtung verlängert, kann damit, je nach Faltung, eine weitere Verschlusslasche 38 oder ein Einleger 40 zur Aufnahme/Halterung zumindest eines Gegenstandes, bspw. eines Versandartikels vorgesehen werden. Dabei können entsprechende Kartoniermaschinen zur Herstellung der Zuschnitte für unterschiedliche Artikelgrössen einfach angepasst werden, da hierfür auf Grund der im Wesentlichen orthogonalen Ausrichtung der Bearbeitungslinien, lediglich die Abstände der Rillier-, Perforations- und/oder Schneidwerkzeuge, sowie der Faltwerkzeuge und Klebepositionen in einer Längs- und/oder Querbearbeitungsvorrichtung angepasst werden müssen. Zusätzlich oder alternativ zu dem in Fig.2 im Detail dargestellten Falt- und Schnittschema eines Einlegers 40 können, wie in Fig.1 oben gezeigt, beispielsweise im Bereich der Deckellasche 46, an spezielle Artikelabmessungen angepasste Schnitte C, $C_1$ - $C_n$ angebracht werden um den Artikel noch besser zu halten oder bei geöffneter Verpackung 30 besser präsentieren zu können. Die Deckellasche 46 kann ganz allgemein auch fest mit dem Innenrand, bzw. Innenrandbereich 41 des Einlegers 40 verbunden sein und mit diesem einen umlaufenden die Einlegeöffnung begrenzenden Innenrand bzw. Innenrandbereich bilden, der an spezielle Artikelabmessungen einfach angepasst werden kann.

In Fig.2 ist ein Detail eines Kartonzuschnitts der Masse x' = 3 (h + a) und y' = b mit einem Einleger abgebildet. In dieser Ausführung wird die Artikelaufnahme mit Einlegeöffnung 47 durch den Einleger 40 gebildet, der aus dem Kartonzuschnitt zwischen der Linie $B_5$ und der dargestellten Y-Seite, die hier einem Seitenmass b' der fertigen Verpackung der Grundfläche entspricht, aufgefaltet wird. Dazu können bspw. zunächst entlang den Linien $A_2$, $A_2$' die inneren Seitenwände mit den daran faltbeweglich verbundenen Deckellaschen und Bodenbreitelaschen rechtwinklig aufgerichtet, anschliessend die weiteren Faltungen am Einleger vorgenommen und dieser schliesslich entlang der Faltlinie $B_5$ um 90° gefaltet werden. Der Einleger wird anschliessend an B4 und B5 in Richtung des Bodens 32 gefaltet (siehe auch Fig.4). Anschliessend werden die von einer Seite X zur gegenüberliegenden Seite X durchgehenden Faltlinien $B_4$ bis $B_1$ entsprechend gefaltet und die Klebelaschen verklebt. Siehe dazu auch die unten näher beschriebene Fig.4, die eine entsprechende geöffnete Verpackung dargestellt. Der über die inneren Seitenwände 45 hinausragende Schutzrand R hat in vorliegendem Fall eine Tiefe $r_s = r + h$.

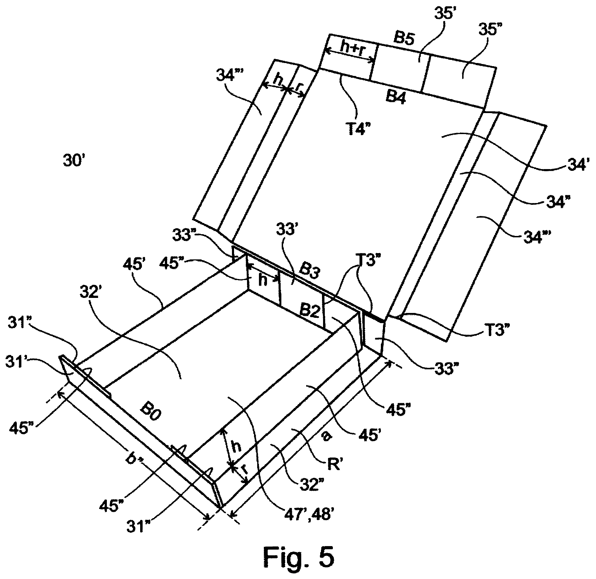

Fig.3 zeigt einen weiteren Kartonzuschnitt für eine zweite Ausführungsform einer Verpackung 30' die im gefalteten aber geöffneten Zustand in der unten näher beschriebenen Fig.5 dargestellt ist. Der Zuschnitt hat die X-Masse x" = 2(a +h) + h. Im Gegensatz zur ersten Ausführungsform wird hier kein Einleger aus einer Grundfläche gefaltet, sondern zusätzliche Faltungen $A_1$-$A_4$ parallel zur Seite X, sowie verschiedene Schnitte $T_1$"-$T_6$" vorgenommen. Die mit den Seiten der vorderen Seitenwand 31', der hinteren Seitenwand 33' sowie der Verschlusslasche 35' faltbeweglich verbundenen Klebelaschen 31", 33", 35" werden dabei jeweils um 180° nach Innen gefaltet und mit den entsprechenden Seitenwänden selbst verklebt, was die Stabilität der Seitenwände erhöht. Hingegen werden die Klebelaschen 45" der inneren Seitenwände 45' lediglich um 90° nach innen gefaltet, dies nach Umfalten des Bodenrandbereichs 32" um 180° und Auffalten der inneren Seitenwände 45' vom Bodenrandbereich um 90°, und anschliessend mit der benachbarten vorderen Seitenwand 31' und mit der benachbarten hinteren Seitenwand 33' verklebt wodurch der Einlegebereich 48' der Verpackung 30' gebildet wird.

Fig.3a zeigt eine alternative Ausführungsform eines Zuschnitts ohne Einleger, bei der schraffiert dargestellte Freistellungen, d.h. Bereiche des Kartons an denen Teile des Basiszuschnitts abgeschnitten, bzw. ausgeschnitten sind, vorgesehen werden. Durch diese Freistellungen kann die im Wesentlichen quaderförmige Geometrie der Verpackung klarer definiert bzw. ausgeformt werden, da Quetschungen in den Ecken vermieden werden und die entsprechenden rechten Winkel erhalten bleiben.

Dabei können bspw. Freistellungen im Bereich der Schnitte $T_1$", $T_2$" und $T_3$", jeweils im Randbereich zwischen den Linien $A_1$" und $A_2$", bzw. zwischen den Linien $A_3$" und $A_4$", bspw. mit einer Länge r vorgenommen werden. Der Ausschnitt der Freistellung hat hier eine Breite von ca. 5 mm (+/- 3 mm) und kann durch einen Doppelschnitt, der am Ende quer geschnitten, so dass ein kleines Rechteck ausgeschnitten wird, hergestellt werden. Die übrigen in Fig. 3a angegebenen Schnitte sind einfache Trennschnitte bei denen der Karton in einem Eck-, bzw. Seitenbereich beschnitten wird. So können bspw. die Laschen 35" mit den Abmessungen h x (h + r) entlang der Trennlinien $T_4$" und $T_7$" abgeschnitten und/oder (zusätzlich) ein Randbeschnitt der Länge a an der Deckelrandseite 34‴ (Breite ca. 3 mm für B-Welle oder Doppel-E-Welle, bzw. ca. 1.5 mm Breite für einfache E-Welle) vorgenommen werden, um die Dicke des Rands R zu kompensieren.

Bezüglich der zusätzlichen oder anders verwendeten Bezugzeichen der Figuren 4 bis 7 sei auf Bezugszeichenliste II hingewiesen.

In Fig.4 ist eine beispielhafte Verpackung dargestellt, die aus einem abfallfreien Kartonzuschnitt, mit Faltlinien und Trennschnitten wie in Fig.2 gezeigt, hergestellt, bzw. aufgefaltet werden kann. Die Verpackung 30 umfasst eine vordere Seitenwand 31, einen Boden 32, eine hintere Seitenwand 33, einen Deckel 34 und eine Verschlusslasche 35. Die Faltlinien und Schnittlinien sind analog den Figuren 1 und 2 bezeichnet, wobei die an die Schnittlinien $T_5$, $T_6$, $T_7$ und T8 angrenzenden Ränder aufgrund der Faltung nun räumlich voneinander getrennt sind, zwecks leichterer Orientierung aber die Bezeichnung der jeweiligen Schnittlinie beibehalten. Die hintere Seitenwand und Deckel mit Verschlusslasche sind in geöffneter Stellung, sodass in die Verpackung bspw. ein einzelner Gegenstand in die Ausnehmung 47, die eine Einlegeöffnung des Einlegers 40 bildet, abgelegt werden kann. Der Einleger, der über die Faltlinie B5 mit der vorderen Seitenwand der Verpackung verbunden ist, wurde hier zusätzlich über eine Bodenlängenlasche 43 sowie eine Bodenbreitelasche 44 mit dem Boden 32 der Verpackung verklebt. Damit erhält diese zusätzliche Stabilität. Zwischen vorderer und hinterer Seitenwand der Verpackung und der Ausnehmung der Einlegeöffnung 47 des Einlegers 40 ist jeweils ein oberer Innenrand, bzw. Innenrandbereich 41 gebildet. Davon sind die zwei gegenüberliegenden, inneren Begrenzungswände 42 der Einlegeöffnung 47 im rechten Winkel nach unten, also Richtung Boden 32 gefaltet. Diese bilden gleichzeitig zusätzliche Stützwände, zu den im geschlossenen Zustand dazu parallelen Seitenwänden 31, 33. Von den inneren Begrenzungswänden 42 wiederum im rechten Winkel entlang des Bodens, im vorliegenden Fall nach innen gefaltet und mit dem Boden verklebt, sind die beiden Bodenlängenlaschen 43 mit der Breite k. Bezüglich der Verwendung "oben" und "unten" wird dies hier, wie ohne weiteres verständlich mit Einlegeöffnung 47, bzw. Deckel 34 im geschlossenen Zustand "oben" und Boden 32 "unten" verwendet. Als "hinten" wird hier die Seite der Verpackung bezeichnet, mit der der Deckel 34 im geöffneten Zustand faltbeweglich verbunden ist, als "vorne" die entsprechende, gegenüberliegende Seite von der ein Operateur oder ein automatischer Handler üblicherweise die Ware in die Packung einlegt. Von den sich zwischen vorderer Seitenwand 31 und hinterer Seitenwand 33 erstreckenden inneren Seitenwänden 45 ist im unteren Bereich die Bodenbreitelasche 44 im rechten Winkel, parallel zum Boden 32 und mit diesem verklebt, nach innen gefaltet. Von den inneren Seitenwänden 45, im Bereich der Einlegeöffnung 47 nach oben geöffnet, sind hier die Deckellaschen 46 dargestellt. Diese können nach dem Einlegen des zu verpackenden Gegenstandes nach unten gedrückt werden, wodurch ein unbeabsichtigtes Herausfallen des Gegenstands während des Versands oder beim Öffnen der Verpackung vermieden werden kann. Wie aus der Gegenüberstellung von Fig.4 und Fig.2 zu erkennen ist, können die Abmessungen der Einlegeöffnung 47 sehr einfach durch entsprechende Wahl der Masse j, k, o und r im Rahmen der Gesamtabmessungen a und b der Verpackung variiert werden.

In vorliegender Fig.4 ist des Weiteren auf der Verschlusslasche 35 ein Doppelklebstreifen 36 angebracht, mit dem die Verpackung, nach Einlegen des zu versendenden Gegenstandes und Auffalten der hinteren Seitenwand und des Deckels, verschlossen werden kann. Der Empfänger kann dann die Verpackung 30 bspw. entlang der Perforationslinie 37 öffnen und dieselbe Verpackung bspw. im Falle einer gewünschten Rücksendung des Gegenstandes wiederverwenden. Dies kann bspw. durch Vorsehen eines weiteren hier nicht dargestellten Doppelklebstreifens mit Abziehfolie in einfacher Weise ermöglicht werden, bspw. durch Anbringen des weiteren Klebestreifens zwischen der Perforationslinie 37 und Faltlinie $B_1$. Bezüglich der Faltrichtung der Bodenbreitelasche 44 sowie der Bodenlängelasche 43 ist anzumerken, dass diese auch, je nach den gewählten, entsprechenden Abmessungen in eine um 180° entgegengesetzte Richtung erfolgen kann. Durch das Übermass der Aussenabmessungen a, b der Verpackung gegenüber dem Einleger 40, entsteht entlang der beiden inneren Seitenwände 45, bei geschlossenem Zustand der Verpackung 30, ein von aussen zugänglicher Randbereich R der einen Hohlraum entsprechend der Tiefe des Randbereichs $r_s = r + h$ bildet und innen durch die inneren Seitenwände 45 abgeschlossen ist. Dadurch kann einerseits die fertige Verpackung 30 leichter gegriffen werden, andererseits erhöht diese Konstruktionsweise wesentlich die Stabilität der Verpackung, wodurch der im Einleger abgelegte Gegenstand besser geschützt ist. Durch die einfache Konfektion der Verpackung, insbesondere der Innenabmessungen des Einlegers 40, kann diese ideal auf die Grösse des Versandguts ausgelegt werden, sodass dieses bündig oder sogar leicht zwischen den Wänden 42, 45 und/oder Deckellasche 46 und Bodenlängenlasche 43 bzw. Bodenbreitelasche 44 geklemmt eingelegt werden kann. Durch eine geeignete Wahl der Lage der Falt- resp. Schnittlinien kann auch eine ideale Aufnahme für geometrisch ganz unterschiedliche Artikel (asymmetrisch, vieleckig, rund, oval, ...) bspw. durch Schrägstellung und federnde Wirkung der Seitenwände 42 erfolgen.

Damit erübrigt es sich, insbesondere im Zusammenhang mit der hohen Stabilität der Verpackung, zusätzliches Verpackungsmaterial zu verwenden.

Die in Fig.4 gezeigte Verpackung eignet sich insbesondere für ein möglichst flaches Verpacken eines oder mehrerer Artikel, was die Zustellung des Pakets, bspw. durch einen Briefkastenschlitz ermöglicht.

Fig.5 stellt eine weitere Ausführungsform einer Verpackung 31' dar. Im Gegensatz zu der in Fig.4 dargestellten Ausführungsform, die besonders für die Verpackung von einzelnen Gegenständen geeignet ist, können in der vorliegenden Verpackung auch mehrerer Gegenstände gleichzeitig verpackt werden. Faltlinien und praktisch abfallfreier Zuschnitt einer solchen, hier ebenfalls in geöffnetem Zustand gezeigten Verpackung 31', wurde in Fig.3 dargestellt. Die Bezugszeichen werden daher analog verwendet, bezüglich der räumlichen Trennung der Schnittlinien und Bezeichnung gilt das bei Fig.4 erwähnte.

Im vorliegenden Fall kann die Verpackung ausgehend von der vorderen Seitenwand 31' über Boden 32', hintere Seitenwand 33', Deckelbereich 34' bis 34''' und Verschlusslasche 35' aufgefaltet werden. Da die inneren Seitenwände 45' im geschlossenen Zustand zusätzlich aussen durch die parallel daneben im Randbereich R' positionierten bzw. geklemmten Deckelrandseiten 34''' verstärkt werden, kann der schützende, nach innen versetzte Randbereich R' kleiner gewählt werden. Während, vor oder nach dem Verschliessen des Deckels mit der Verschlusslasche 35', bspw. mittels Klebstreifen an der vorderen Seitenwand 31' oder der Verschlusslasche 35', ähnlich zu dem unter Fig.4 Erwähnten - wird der Deckelrand 34'' um 180° nach unten innen und die Deckelrandseite 34''' von diesem wiederum um 90° nach unten gefaltet. Dadurch wird die Deckelrandseite 34''' parallel zur inneren Seitenwand 45' zusätzlich stützend zwischen Bodenrand 32'' und Deckel 34' klemmend gehalten. Die Deckelrandseiten 34''' haben hier die Funktion von zusätzlichen Stützwänden. Zur Stabilisierung auch der geöffneten Verpackung werden verschiedene Verklebungen vorgenommen, so werden die von der vorderen Seitenwand 31' und der hinteren Seitenwand 33' abstehende Klebelaschen 33'' jeweils durch Umfalten um 180° an der entsprechenden Seitenwand 31', 33' verklebt. Ebenso wird mit den an der Verschlusslasche 35' faltbeweglich angeordneten, weiteren Klebelasche 35'' verfahren. Zur Befestigung des Einlegebereichs 48' werden die an den inneren Seitenwänden 45' faltbeweglich befestigten Seitenklebelaschen 45'' mit der vorderen Seitenwand 31' und der hinteren Seitenwand 33' verbunden. Des Weiteren können Boden 32' und Bodenrand 32'' miteinander verklebt sein. Bei dieser vorliegenden Verpackung 31' kann es vorteilhaft sein, zusätzliches Füllmaterial oder einen in diesem Fall nicht mit der eigentlichen Verpackung faltbeweglich verbundenen Einleger zur Trennung unterschiedlicher Gegenstände im Einlegebereich 48' vorzusehen.

Gegenüber vorbekannten, automatisch herstellbaren Verpackungen zeichnen sich die hier beispielhaft aufgeführten, erfindungsgemässen Verpackungen durch eine vom einzulegenden Gegenstand, bzw. von den einzulegenden Gegenständen und zusätzlichen Einlegern bzw. Füllmaterial weitgehend unabhängige Festigkeit aus. Damit können Sie bspw. im geöffneten oder geschlossenen, aber noch nicht zugeklebten Zustand ohne Weiteres auch auf Vorrat gehalten, und bei Bedarf abgerufen werden.

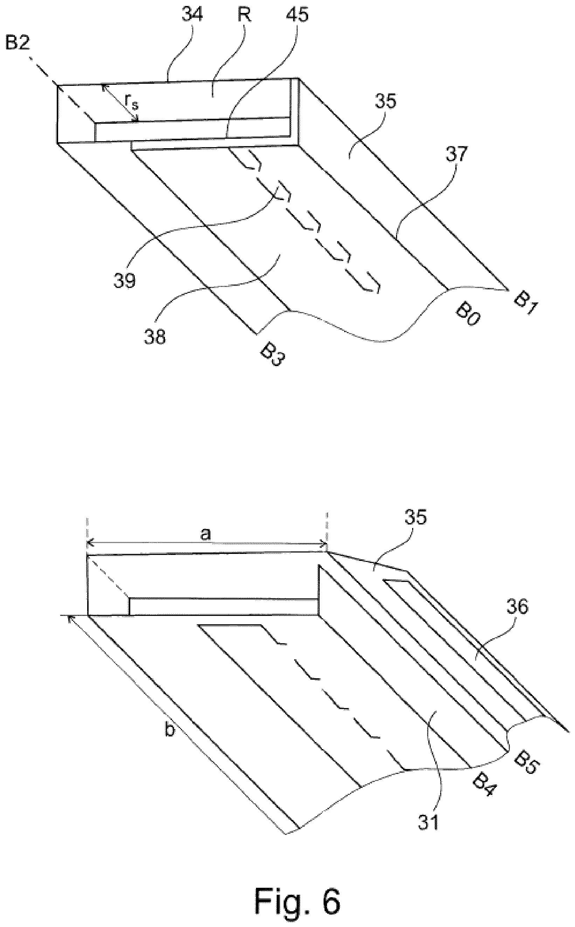

In Fig.6 wird ein weiteres Verschlusssystem, das prinzipiell für alle erfindungsgemäss genannten Verpackungen anwendbar ist, im Detail gezeigt. Dabei ist die Verschlusslasche 35, 35' im Bereich der Seiten bzw. Linien $B_0$, B5 mit der Länge b, b'' um eine weitere Verschlusslasche 38 verlängert und mit dieser faltbeweglich verbunden. Die weitere Verschlusslasche kann in diesem Fall höchstens die Masse der Grundfläche der Verpackung, also a x b oder a x b'' aufweisen.

Die weitere Verschlusslasche 38 ist in ihrem bezüglich des Kartonzuschnitts endständigen Bereich zumindest im Bereich der längeren Seite B, B'' mit dem Boden 32, 32' der Verpackung verklebt. Gleichzeitig ist an der weiteren Verschlusslasche 38 eine Abrisslasche 39 vorgesehen, die den verklebten Bereich vom nicht verklebten Bereich der weiteren Verschlusslasche 38 trennt. Im vorliegenden Fall wird die Abrisslasche 39 durch zwei fischgrätenartig angeordnete Perforationslinien gebildet. Entlang der Faltlinie $B_0$, die sich an der zwischen der Verschlusslasche 35, 35' und weiterer Verschlusslasche 38 im geschlossenen Zustand gebildeten Kante befindet, ist eine Perforationslinie 37 vorgesehen. Somit kann der Empfänger in besonders einfacher Weise die Verpackung mit Hilfe der Abrisslasche 39 öffnen, und die Reste der weiteren Verschlusslasche 38 entlang der Perforation 37 abreissen. Für einen eventuellen Rückversand ist an der Innenseite der Verschlusslasche 35, 35' ein mit einer hier nicht dargestellten Abzugsfolie abgedeckter Klebestreifen 36 vorgesehen, den der Empfänger für eine weitere Verwendung der Verpackung verwenden kann.

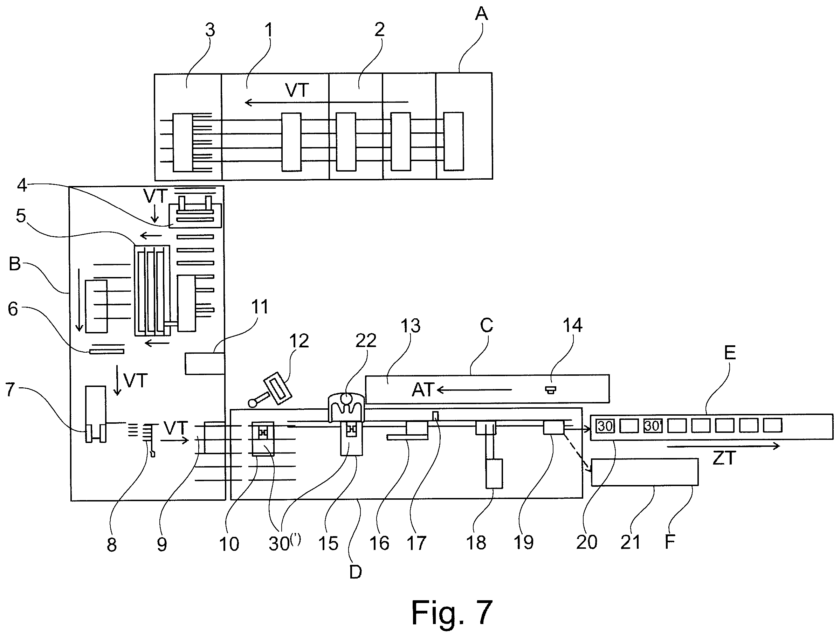

In Fig.7 ist ein Verpackungssystem dargestellt, welches neben den notwendigen Subsystemen wie Kartonzufuhr A mit Kartonanleger 1, Kartoniermaschine B, Packstation 15, sowie Artikeltransporteinheit C weitere optionale Subsysteme darstellt. Das Computerinterface wird hier nicht dargestellt da ähnliche Systeme prinzipiell im Bereich der industriellen Anlagensteuerung bekannt sind. Die in Fig.7 gezeigte Kartonzufuhr A umfasst neben dem Kartonanleger 1 weitere zusätzliche Kartonanleger 2. Durch den oder die Kartonanleger 1, 2 werden jeweils gleichmassige Basiszuschnitte BZ mit den Seiten X, Y von einem Kartonstapel separiert und bspw. auf mehreren parallelen Förderriemen abgelegt. Es können dabei übliche Kartonanleger mit bis zu 500 Stück oder bis zu 1500 Stück Stapelkapazität verwendet werden. Die Kartonzufuhr ist je nach Bedarf mit zusätzlichen Kartonanlegern 2 ausrüstbar, um für unterschiedliche Grössen des Basiszuschnitts BZ jeweils einen entsprechenden Kartonanleger 1, 2 zur Verfügung zu haben. Am Ende der hier dargestellten Kartonzufuhr A in Richtung der Kartoniermaschine ist ein Einzug 3 zur Ausrichtung der unterschiedlichen Basiszuschnitte BZ vorgesehen, um die Zuschnitte BZ der Kartoniermaschine B zu übergeben. Ein solcher separater Einzug 3 kann bei einer Kartonzufuhr A, die nur einen Kartonanleger 1 umfasst, entfallen, falls die Ausrichtung durch, bzw. im Bereich des Kartonanlegers erfolgen kann. In der abgebildeten Kartoniermaschine B wird zunächst der Basiszuschnitt BZ, bspw. unter Verwendung von Walzenpaaren, exakt positioniert und in einer Längsbearbeitungsstation rilliert und/oder perforiert und bei Bedarf geschnitten. Hier werden bspw. die zur Seite X parallelen Faltlinien A und entsprechende Parallelschnitte T (bspw. $T_7$, $T_5''$, $T_6''$ etc.) hergestellt. Das Rillieren und Perforieren kann dabei im Durchlauf mit Rädern, das Schneiden bzw. ein kombiniertes Schneiden und Perforieren bspw. mit oszillierenden Messern vorgenommen werden. Analog dazu werden in der anschliessenden Querbearbeitungsstation 5 das Rillieren, Perforieren und/oder Schneiden der zur Seite Y parallelen Faltlinien B, bzw. dazu parallelen Trennlinien (bspw. $T_5$, $T_6$, $T_8$, $T_1''$, $T_2''$, $T_3''$, $T_4''$ usw.) vorgenommen. Der Transport zwischen den einzelnen Stationen kann über Walzen und/oder Transportriemen erfolgen. Im daran anschliessenden Faltwerk 6 kann ein Einleger bspw. entsprechend den Figuren 2 und 4 gefaltet werden, der im anschliessenden Faltwerk 7 als erstes aufgerichtet wird. Einzelne oder auch alle Trennlinien können auch alternativ in Station 6 oder 7 angebracht werden. In der folgenden Falt- und Klebestation 8 wird der Einleger mit der übrigen Verpackung, bspw. durch Auftragen von Heissleim verklebt, in der Faltstation 9 fertiggefaltet und bei Bedarf fertigverklebt, und anschliessend in der Wendestation 10 um 180° gewendet, sodass die geöffnete Verpackung nach oben und mit der vorderen Seitenwand zum Einlegepersonal oder Einlegeroboter gerichtet, zur Packstation 15 angeliefert wird. Für Verpackungen, wie sie in den Figuren 3 und 5 dargestellt sind, können die Stationen 6 bis 9 so angepasst werden, dass dort auch ein Verkleben der unterschiedlichen Klebelaschen (bspw. 33'', 35'', 45'' etc.) durchgeführt werden kann. Das Wenden der Verpackung erfolgt, falls notwendig, analog in Station 10. Station 10 ist der, hier um eine Prüfeinheit 19 erweiterten Packeinheit zugeordnet, kann aber auch Teil der Kartoniermaschine sein. An der Einlegestation 15 werden die über die Artikeltransporteinheit C in Artikeltransportrichtung AT zugeführten Artikel, bzw. Gegenstände durch den Operateur oder auch einen Roboter (bspw. Scara-Roboter) in die Verpackung 30, 30' eingelegt. Die Abmessungen der einzelnen, zu verpackenden Gegenstände werden durch eine Objekterkennung 14 erfasst, die gleichzeitig eine Zählfunktion haben kann. Zusätzlich oder alternativ kann die Objekterkennung 14 auch als Code-Leser ausgebildet sein. Die von der Objekterkennung 14 ermittelten Daten werden an ein Computer-Interface gesendet und von diesem entweder direkt oder über verbundene Subsysteme, die Ausgabe eines entsprechenden Basiszuschnitts durch die Kartonzufuhr A, sowie die entsprechende Ansteuerung der Kartoniermaschine B gesteuert. Der Prozess kann, bei manueller Operation durch den Operateur 22 über das Bedienpanel 12 jederzeit unterbrochen oder neu gestartet werden. Alternativ kann statt des Operateurs ein Einlegeroboter verwendet werden, der mit dem Computer-Interface kommuniziert. Die Packeinheit D des Verpackungssystems umfasst im vorliegenden Fall auch ein Faltwerk 16, um die Verpackung zuzufalten, eine Auftragsstation 17 für Heissleim, die Heissleim auf den Verschluss aufbringt sowie eine Verschliess- und Etikettierstation 18 zum Kennzeichnen des Produkts und zur Adressierung. Strömungsabwärts folgt eine Kontrollstation 19, die überprüft, ob die Verpackungen ordnungsgemäss verschlossen sind. Dies kann mechanisch und/oder bevorzugt über ein optisches Erkennungssystem geprüft werden. Ordnungsgemäss verschlossene Verpackungen 30, 30' werden anschliessend von einer Abtransportvorrichtung E übernommen bzw. auf dieser, bspw. einem Abtransportband 20, abgelegt. Fehlerhafte Verpackungen werden von einer Ausschussaufnahme F übernommen, bzw. auf dieser, bspw. einem weiteren Abtransportband 21, abgelegt.

**Patentansprüche**

1. Verfahren zur Herstellung einer wiederverwendbaren Verpackung aus einem Karton, bei dem ein einziger rechteckiger Basiszuschnitt (BZ) mit Seiten (X, X') und (Y, Y') und einer Gesamtfläche (xy) bereitgestellt wird und

$$2 \ (a + h) + a < x \leq 3 \ (a + h) + a$$

und
b = y,

wobei a und b den Seitenmassen der Grundfläche und h der Höhe der fertigen Verpackung entsprechen und das Verfahren folgende weitere Schritte umfasst:

- Herstellen von Faltlinien $(B_n)$ des Basiszuschnitts parallel zu einer ersten Seite (Y) in zumindest folgenden Abständen von dieser:

$$(B_1): \quad a_1 = h$$

$$(B_2): \quad a_2 = h + a$$

$$(B_3): \quad a_3 = 2h + a$$

$$(B_4): \quad a_4 = 2(h + a)$$

$$(B_5): \quad a_5 = 2(h + a) + h,$$

wobei ein bezüglich der Seite (X) endständiger Einleger (E, 40) von einer daran angrenzenden Seitenfläche durch trennendes Einschneiden zweier Trennlinien $(T_1)$, jeweils ausgehend von gegenüberliegenden Seiten (X), entlang einer der Faltlinien $(B_5)$ oder $(B_0)$, oder eine dieser Faltlinien verlängernd, so getrennt wird, dass der Abstand zwischen den beiden inneren Endpunkten $(E_T)$ der Trennlinien $(T_n)$, der Länge m einer Seite (M) des Einlegers (E, 40) entspricht und der Einleger (E, 40) aus dem Zuschnitt rechteckig aufgefaltet wird und die zweite Seitenlänge des Einlegers (E, 40) im Wesentlichen dem Seitenmass a der Grundfläche der fertigen Verpackung (30) entspricht, wobei

- ein Herstellen von Faltlinien (A) am Basiszuschnitt im Bereich des Einlegers (E, 40) parallel zu beiden Seiten (X) jeweils in folgenden Abständen zu den entsprechenden Seitenlinien erfolgt:

$$(A_1, A_1') = r$$

$$(A_2, A_2') = r + h,$$

wobei r der um die Höhe (h) verringerte Breite des Randbereichs (R) der fertigen Verpackung entspricht.

2. Verfahren nach Anspruch 1, **dadurch gekennzeichnet, dass** die Länge (t) der Trennlinien $(T_n)$

$$h \leq t < y / 2.$$

3. Verfahren nach einem der vorhergehenden Ansprüche, **dadurch gekennzeichnet, dass** zumindest eine Faltlinie $(B_n)$ nur im Bereich zwischen zwei die Faltlinie $(B_n)$ verlängernden Trennlinien $(T_n)$ angebracht wird.

4. Verfahren nach einem der vorhergehenden Ansprüche, **dadurch gekennzeichnet, dass** zumindest eine Seitenfläche oder/und eine Grundfläche als Verschlusslasche (35, 35') ausgebildet ist und zumindest eine Perforationslinie (37), parallel zur und/oder auf der Faltlinie $(B_n)$, vorgesehen ist.

5. Verfahren nach einem der vorhergehenden Ansprüche, **dadurch gekennzeichnet, dass**

- eine Vorbereitung einer Artikelaufnahme in einem mittigen Bereich $(B_M)$ des Einlegers (E, 40) erfolgt, wobei die Vorbereitung zumindest eine der folgenden Operationen umfasst:

• Anbringen zumindest einer weiteren Trennlinie (T) ;
• Anbringen zumindest einer weiteren Faltlinie (A) parallel zur Seite (X, X') und/oder (B) parallel zur Seite (Y, Y');
• Anbringen zumindest eines Ausschnitts (C).

6. Verfahren nach Anspruch 5, **dadurch gekennzeichnet, dass** die Vorbereitung der Artikelhalterung im Bereich des Einlegers (E) folgende Schritte umfasst:

- Herstellen von Faltlinien der Länge n = m - 2 o = y - 2 (r + h + o) parallel und mittig zu der den Einleger (E) begrenzenden Seite (Y') in folgenden Abständen von dieser:

- 

$$(B_6) = a - j$$

- 

$$(B_7) = a - (j + h)$$

- 

$$(B_7') = j + h$$

- 

$$(B_6') = j,$$

wobei o der Abstand zwischen den zur Seite (X) parallelen Faltlinien ($A_2$, $A_2$') und einem Innenrand des Einlegers (E), j der Abstand zwischen (Y') bzw. der zur Seite (Y') parallelen Faltlinie ($B_5$) und einem weiteren Innenrand des Einlegers (E), und (j + h + k) = a / 2 der Abstand zur Mitte des Einlegers (E) von den Seiten (Y') und ($B_5$) ist;
- Anbringen einer Trennlinie ($T_6$) in einem bezüglich der Seite a mittleren Bereich des Einlegers;
- Anbringen zweier Trennlinien ($T_7$) jeweils zwischen gegenüberliegenden Faltlinien ($A_2$, $A_2$') und der Symmetrie-achse ($S_1$).

7. Verfahren nach Anspruch 6, **dadurch gekennzeichnet, dass** zumindest in einseitiger Verlängerung der Faltlinien ($B_6$) und ($B_6$') jeweils eine Trennlinie ($T_8$, $T_8$') bis zur Faltlinie ($A_2$), und/oder ($A_2$') angebracht wird.

8. Verfahren nach einem der vorhergehenden Ansprüche, **dadurch gekennzeichnet, dass** die Länge h zwischen den Faltlinien ($B_5$) und ($B_4$) und/oder den Faltlinien ($B_6$, $B_6$') und ($B_7$, $B_7$') sowie die Längen a des Einlegers (E, 40) um eine einfache bis mehrfache Dicke d des Kartons korrigiert ist.

9. Verfahren nach einem der vorhergehenden Ansprüche, **dadurch gekennzeichnet, dass** das Herstellen von Faltlinien (A, B) durch Rillierung und/oder durch Perforierung erfolgt.

10. Verfahren nach einem der vorhergehenden Ansprüche, **dadurch gekennzeichnet, dass** zumindest eine Höhe h und/oder zumindest eine Abmessung a um die einfache oder mehrfache Dicke d des Kartons korrigiert ist.

11. Verfahren nach einem der vorhergehenden Ansprüche, **dadurch gekennzeichnet, dass** der Karton (30) aus dem Zuschnitt (BZ) so aufgerichtet wird, dass ein Artikel eingelegt werden kann.

12. Verpackung die aus einem Basiszuschnitt (BZ) eines Kartons nach einem Verfahren gemäss Anspruch 1 bis 11 hergestellt ist, **dadurch gekennzeichnet, dass** die Verpackung (30) zumindest im geschlossenen Zustand zumindest bezüglich zweier Seitenwände (31, 33) durch zwei weitere Stützwände (42) mechanisch verstärkt ist, wobei die Stützwände (42) jeweils über zumindest eine Faltlinie (A, B, $B_6$, $B_6$', $B_7$, $B_7$', $A_2$, $A_2$') mit der Verpackung (30) verbunden sind.

13. Verpackung nach Anspruch 12, **dadurch gekennzeichnet, dass** die Verpackung (30) im Wesentlichen quaderförmig ist, wobei je zwei gegenüberliegende Seitenflächen mit Massen a und h eine umlaufende Randkante ($R_K$) eines Randbereichs (R) und eine dazu um einen Abstand $r_s$ = r + h nach innen versetzte Seitenfläche (45) aufweisen.

14. Zuschnitt zur Herstellung einer Verpackung nach einem der Ansprüche 12 oder 13, hergestellt nach einem Verfahren gemäss einem der Ansprüche 1 bis 11, wobei der Zuschnitt ein rechteckiger Basiszuschnitt (BZ) mit Seiten (X, X') und (Y, Y') und einer Gesamtfläche (xy) ist, wobei

$$2\,(a\,+\,h)\,+\,a\,<\,x\,\leq\,3\,(a\,+\,h)\,+\,a$$

und
b = y,

und a und b den Seitenmassen der Grundfläche und h der Höhe der fertigen Verpackung entsprechen und der Zuschnitt folgende Faltlinien ($B_n$) parallel zu einer ersten Seite (Y) in zumindest folgenden Abständen von dieser umfasst:

$$(B_1):\quad a_1\,=\,h$$

$$(B_2):\quad a_2\,=\,h\,+\,a$$

$$(B_3):\quad a_3\,=\,2h\,+\,a$$

$$(B_4):\quad a_4\,=\,2(h\,+\,a)$$

$$(B_5):\quad a_5\,=\,2(h\,+\,a)\,+\,h,$$

wobei ein bezüglich der Seite (X) endständiger Einleger (E, 40) von einer daran angrenzenden Seitenfläche durch zwei Trennlinien ($T_n$), jeweils ausgehend von gegenüberliegenden Seiten (X), entlang einer Verlängerung einer Faltlinien ($B_5$) oder ($B_0$), so getrennt ist, dass der Abstand zwischen den beiden inneren Endpunkten ($E_T$) der Trennlinien ($T_n$), der Länge m einer Seite (M) des Einlegers entspricht,

- wobei im Bereich des Einlegers (E, 40) parallel zu beiden Seiten (X) jeweils in folgenden Abständen zu den entsprechenden Seitenlinien Faltlinien ($A_n$) angeordnet sind:

$$(A_1,\ A_1')\,=\,r$$

$$(A_2,\ A_2')\,=\,r\,+\,h,$$

wobei r der um die Höhe (h) verringerte Breite des Randbereichs (R) der fertigen Verpackung entspricht.

**Claims**

1. A method for producing a reusable packaging from a carton, in which a single rectangular base blank (BZ) with sides (X, X') and (Y, Y') and a total area (xy) is provided, and

$$2\,(a\,+\,h)\,+\,a\,<\,x\,\leq\,3\,(a\,+\,h)\,+\,a$$

and
b = y,

wherein a and b correspond to the side dimensions of the base area and h to the height of the finished packaging and the method includes the following further steps:

- create fold lines ($B_n$) of the base blank parallel to a first side (Y) at at least the following distances therefrom:

$$(B_1):\quad a_1\,=\,h$$

$$(B_2): \quad a_2 = h + a$$

$$(B_3): \quad a_3 = 2h + a$$

$$(B_4): \quad a_4 = 2(h + a)$$

$$(B_5): \quad a_5 = 2(h + a) + h,$$

wherein an insert (E, 40) terminal with respect to the side (X) is separated from an adjacent side surface by severing two severing lines $(T_n)$, each starting from opposite sides (X), along one of the fold lines $(B_5)$ or $(B_0)$, or extending one of these fold lines, in such a way that the distance between the two inner end points $(E_T)$ of the severing lines $(T_n)$, corresponds to the length m of one side (M) of the insert (E, 40), and the insert (E, 40) is unfolded from the blank into a rectangular shape, and the second side length of the insert (E, 40) corresponds substantially to the side dimension a of the base area of the finished packaging (30), wherein

- a creating of folding lines (A) at the base blank in the area of the insert (E, 40) is carried out parallel to both sides (X) in each case at the following intervals to the corresponding side lines:

$$(A_1, A_1') = r$$

$$(A_2, A_2') = r + h,$$

wherein r corresponds to the width of the periphery area (R) of the finished packaging reduced by height (h).

2. The method of claim 1, **characterized in that** the length (t) of the severing lines $(T_n)$

$$h \le t < y / 2.$$

3. The method according to any one of the preceding claims, **characterised in that** at least one fold line $(B_n)$ is applied only in the region between two severing lines $(T_n)$ extending the fold line $(B_n)$.

4. The method according to any one of the preceding claims, **characterised in that** at least one side surface or/and one base area is formed as a closure tab (35, 35') and at least one perforation line (37) is provided parallel to and/or on the fold line $(B_n)$.

5. The method according to any of the preceding claims, **characterised in that**

- a preparation of an article holder is carried out in a central region $(B_M)$ of the insert (E, 40), wherein the preparation includes at least one of the following operations:

  • forming at least one other severing line (T);
  • forming at least one other fold line (A) parallel to the side (X, X') and/or (B) parallel to the side (Y, Y');
  • forming at least one cut-out (C).

6. The method of claim 5, **characterised in that** the preparation of the article holder in the area of the insert (E) comprises the following steps:

- producing fold lines of length $n = m - 2 \circ = y - 2(r + h + o)$ parallel and central to the side (Y') bounding the insert (E) at the following distances from it:

  •

$$(B_6) = a - j$$

- 

$$(B_7) = a - (j + h)$$

- 

$$(B_7') = j + h$$

- 

$$(B_6') = j,$$

wherein o is the distance between the fold lines $(A_2, A_2')$ parallel to the side $(X)$ and an inner edge of the insert $(E)$, j is the distance between $(Y')$ or the fold line $(B_5)$ parallel to the side $(Y')$ and another inner edge of the insert $(E)$, and $(j + h + k) = a / 2$ is the distance to the centre of the insert $(E)$ from the sides $(Y')$ and $(B_5)$;
- forming a severing line $(T_6)$ in a central region of the insert with respect to side a;
- forming two severing lines $(T_7)$ between opposing folding lines $(A_2, A_2')$ and the axis of symmetry $(S_1)$.

7. The method of claim 6, **characterised in that** at least in unilateral extension of the fold lines $(B_6)$ and $(B_6')$ a severing line $(T_8, T_8')$ is formed to the fold line $(A_2)$, and/or $(A_2')$.

8. The method according to any one of the preceding claims, **characterised in that** the length h between the fold lines $(B_5)$ and $(B_4)$ and/or the fold lines $(B_6, B_6')$ and $(B_7, B_7')$ and the lengths a of the insert $(E, 40)$ are corrected by once or many times the thickness d of the carton.

9. The method according to any of the preceding claims, **characterised in that** the production of folding lines $(A, B)$ is carried out by creasing and/or by perforation.

10. The method according to any of the preceding claims, **characterised in that** at least one height h and/or at least one dimension a is corrected by once or many times the thickness d of the carton.

11. The method according to any of the preceding claims, **characterised in that** the carton (30) is erected from the blank (BZ) in such a way that an article can be inserted.

12. A packaging produced from a basic blank (BZ) of a carton according to a method of claims 1 to 11, **characterised in that** the packaging (30) is mechanically reinforced by two further support walls (42) at least in the closed state, at least with regard to two side walls (31, 33), wherein the support walls (42) each are connected to the packaging (30) via at least one fold line $(A, B, B_6, B_6', B_7, B_7', A_2, A_2')$.

13. The packaging according to claim 12, **characterised in that** the packaging (30) is essentially cuboid, wherein two opposite side surfaces with dimensions a and h each have a circumferential periphery edge $(R_K)$ of a periphery area $(R)$ and a side surface (45) offset inwards by a distance $r_s = r + h$.

14. A blank for producing a packaging according to any one of claims 12 or 13, prepared by a process according to any one of claims 1 to 11, wherein the blank is a rectangular base blank (BZ) with sides $(X, X')$ and $(Y, Y')$ and a total area $(xy)$, wherein

$$2 (a + h) + a < x \le 3 (a + h) + a$$

and
b = y,

and a and b correspond to the side dimensions of the base area and h to the height of the finished packaging and the blank comprises the following folding lines $(B_n)$ parallel to a first side $(Y)$ at at least the following distances therefrom:

$$(B_1): \quad a_1 = h$$

$$(B_2): \quad a_2 = h + a$$

$$(B_3): \quad a_3 = 2h + a$$

$$(B_4): \quad a_4 = 2(h + a)$$

$$(B_5): \quad a_5 = 2(h + a) + h,$$

wherein an insert (E, 40) terminal with respect to the side (X) is separated from an adjacent side surface by two severing lines $(T_n)$, each starting from opposite sides (X), along an extension of a folding line $(B_5)$ or $(B_0)$, in such a way that the distance between the two inner end points $(E_T)$ of the severing lines $(T_n)$ corresponds to the length m of one side (M) of the insert,

- wherein in the area of the insert (E, 40) fold lines $(A_n)$ are arranged parallel to both sides (X) at the following intervals to the corresponding side lines:

$$(A_1, A_1') = r$$

$$(A_2, A_2') = r + h,$$

wherein r corresponds to the width of the periphery area (R) of the finished packaging reduced by height (h).

## Revendications

1. Procédé de fabrication d'un emballage réutilisable à partir d'un carton, dans lequel on met à disposition une découpe de base rectangulaire unique (BZ) présentant des côtés (X, X') et une surface totale (xy), et dans lequel

$$2(a + h) + a < x \le 3(a + h) + a$$

et
b = y,

où a et b correspondent aux dimensions latérales de la surface de base et h à la hauteur de l'emballage fini, et le procédé comporte les autres étapes suivantes :

- fabrication de lignes de pliure $(B_n)$ de la découpe de base parallèlement à un premier côté (Y) selon au moins les distances suivantes à celui-ci :

$$(B_1) : a_1 = h$$

$$(B_2) : a_2 = h + a$$

$$(B_3) : a_3 = 2h + a$$

$$(B_4) : a_4 = 2(h + a)$$

$$(B_5) : a_5 = 2(h + a) + h,$$

où un insert (E, 40), en extrémité par rapport au côté (X), est séparé d'une surface latérale qui y est contiguë par une entaille de séparation de deux lignes de séparation ($T_n$), respectivement en partant de côtés (X) opposés le long d'une ligne de pliure ($B_5$) ou ($B_0$) ou prolongeant une de ces lignes de pliure de façon telle que la distance entre les deux points d'extrémité internes ($E_T$) des lignes de séparation ($T_n$) correspond à la longueur m d'un côté (M) de l'insert (E, 40), et l'insert (E, 40) est replié à partir de la découpe en rectangle, et la seconde longueur latérale de l'insert (E, 40) correspond essentiellement à la dimension latérale a de la surface de base de l'emballage fini (30), où

- une fabrication des lignes de pliure (A) au niveau de la découpe de base se fait dans la zone de l'insert (E, 40) parallèlement aux deux côtés (X) respectivement selon les distances suivantes aux lignes latérales correspondantes :

$$(A_1, A_1') = r$$

$$(A_2, A_2') = r + h,$$

où r est la largeur de la zone de bord (R) de l'emballage fini réduite par la hauteur (h).

2. Procédé selon la revendication 1, **caractérisé en ce que** la longueur t des lignes de séparation ($T_n$) est

$$h \leq t < y / 2.$$

3. Procédé selon l'une des revendications précédentes, **caractérisé en ce qu'**au moins une ligne de pliure ($B_n$) est appliquée uniquement dans la zone entre deux lignes de séparation ($T_n$) prolongeant la ligne de pliure ($B_n$).

4. Procédé selon l'une des revendications précédentes, **caractérisé en ce qu'**au moins une surface latérale et/ou une surface de base est réalisée en tant que languette de fermeture (35, 35'), et au moins une ligne de perforation (37) est prévue parallèlement à et/ou sur la ligne de pliure ($B_n$).

5. Procédé selon l'une des revendications précédentes, **caractérisé en ce que**

- une préparation d'une réception d'article se fait dans une zone médiane ($B_M$) d'un insert (E, 40), la préparation comprenant au moins l'une des opérations suivantes :

  • application d'au moins une autre ligne de séparation (T) ;
  • application d'au moins une autre ligne de pliure (A) parallèlement au côté (X, X') et/ou (B) parallèlement au côté (Y, Y') ;
  • application d'au moins une entaille (C).

6. Procédé selon la revendication 5, **caractérisé en ce que** la préparation de la fixation d'article dans la zone de l'insert (E) comprend les étapes suivantes :

- fabrication de lignes de pliure des longueurs n = m - 2 o = y - 2 (r + h + o) parallèlement à et au milieu par rapport au côté (Y') délimitant l'insert (E) selon les distances à celui-ci :

  •

$$(B_6) = a - j$$

  •

$$(B_7) = a - (j + h)$$

  •

$$(B_7') = j + h$$

•

$$(B_6') = j,$$

où o est la distance entre les lignes de pliure $(A_2, A_2')$ parallèles au côté (X) et un bord intérieur de l'insert (E), j est la distance entre (Y') ou la ligne de pliure $(B_5)$ parallèle au côté (Y') et un autre bord intérieur de l'insert (E), et (j + h + k) = a / 2 est la distance au milieu de l'insert (E) depuis les côtés (Y') et $(B_5)$ ;

- application d'une ligne de séparation $(T_6)$ dans une zone médiane de l'insert par rapport au côté a ;
- application de deux lignes de séparation $(T_7)$ respectivement entre les lignes de pliure opposées $(A_2, A_2')$ et l'axe de symétrie $(S_1)$.

7. Procédé selon la revendication 6, **caractérisé en ce qu'**au moins dans le prolongement unilatéral des lignes de pliure $(B_6')$ et $(B_6')$ est appliquée respectivement une ligne de séparation $(T_8, T_8')$ jusqu'à la ligne de pliure $(A_2)$ et/ou $(A_2')$.

8. Procédé selon l'une des revendications précédentes, **caractérisé en ce que** la longueur h entre les lignes de pliure $(B_5)$ et $(B_4)$ et/ou les lignes de pliure $(B_6, B_6')$ et $(B_7, B_7')$, ainsi que les longueurs a de l'insert (E, 40), sont corrigées d'une ou plusieurs fois l'épaisseur d du carton.

9. Procédé selon l'une des revendications précédentes, **caractérisé en ce que** la fabrication des lignes de pliure (A, B) se fait par rainurage et/ou perforation.

10. Procédé selon l'une des revendications précédentes, **caractérisé en ce qu'**au moins une hauteur h et/ou au moins une dimension a est corrigée d'une ou de plusieurs fois l'épaisseur d du carton.

11. Procédé selon l'une des revendications précédentes, **caractérisé en ce que** le carton (30) est construit à partir de la découpe (BZ) de façon telle qu'un article peut être inséré.

12. Emballage qui est fabriqué à partir d'une découpe de base (BZ) d'un carton selon un procédé selon la revendication 1 à 11, **caractérisé en ce que** l'emballage (30), au moins à l'état fermé, est renforcé mécaniquement au moins par rapport aux deux parois latérales (31, 33), par deux autres parois d'appui (42), les parois d'appui (42) étant respectivement reliées à l'emballage (30) par au moins une ligne de pliure $(A, B, B_6, B_6', B_7, B_7', A_2, A_2')$.

13. Emballage selon la revendication 12, **caractérisé en ce que** l'emballage (30) est essentiellement en forme de quadrilatère, les deux surfaces latérales opposées respectives, de dimensions a et h, présentant une arête de bord circonférentielle $(R_K)$ d'une zone de bordure (R) et une surface latérale (45) décalée vers l'intérieur par rapport à celle-ci d'une distance rs = r + h.

14. Découpe pour fabriquer un emballage selon l'une des revendications 12 ou 13, fabriquée selon un procédé selon l'une des revendications 1 à 11, la découpe étant une découpe de base rectangulaire (BZ) présentant des côtés (X, X') et (Y, Y') et une surface totale (xy), où

$$2 (a + h) + a < x \leq 3 (a + h) + a$$

et
b = y,

et a et b correspondent aux dimensions latérales de la surface de base et h à la hauteur de l'emballage fini, et la découpe présente les lignes de pliure suivantes $(B_n)$ parallèlement à un premier côté (Y) selon les distances suivantes à celui-ci :

$$(B_1): \quad a_1 = h$$

$$(B_2): \quad a_2 = h + a$$

$$(B_3): \quad a_3 = 2h + a$$

$$(B_4) : a_4 = 2 (h + a)$$

$$(B_5) : a_5 = 2(h + a) + h,$$

où un insert (E, 40), en extrémité par rapport au côté (X), est séparé d'une surface latérale qui y est contiguë par deux lignes de séparation ($T_n$), respectivement en partant de côtés opposés (X), le long d'une prolongation d'une ligne de pliure ($B_5$) ou ($B_0$) de façon telle que la distance entre les deux points d'extrémité internes ($E_T$) des lignes de séparation ($T_n$) correspond à la longueur m d'un côté (M) de l'insert,

   - où, dans la zone de l'insert (E, 40), parallèlement aux deux côtés (X), sont disposées respectivement des lignes de pliure ($A_n$) selon les distances suivantes par rapport aux lignes latérales correspondantes :

$$(A_1, A_1') = r$$

$$(A_2, A_2') = r + h,$$

où r est la largeur de la zone de bord (R) de l'emballage fini réduite par la hauteur (h).

Fig. 1

Fig. 2

Fig. 3

Fig. 3a

Fig. 4

EP 3 615 428 B1

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7647752 B2
- EP 172133 A1
- WO 2008152344 A1
- US 4300679 A